# EUROPEAN PATENT SPECIFICATION

(11) **EP 3 516 315 B1**
(45) Date of publication and mention of the grant of the patent: **30.12.2020**
(21) Application number: 17852299.1
(22) Date of filing: 08.09.2017
(51) Int. Cl.: F26B 5/04, H01M 10/058, F26B 21/14, F26B 3/04

(54) **METHOD OF DRYING ELECTRODE ASSEMBLIES**
VERFAHREN ZUM TROCKNEN VON ELEKTRODENANORDNUNGEN
PROCÉDÉ DE SÉCHAGE D'ENSEMBLES ÉLECTRODES

(30) Priority: 22.09.2016 US 201615272488
(43) Date of publication of application: 31.07.2019
(60) Divisional application: 20201984.0
(73) Proprietor: GRST International Limited, Hong Kong (CN)
(72) Inventor: HO, Kam Piu, New Territories Hong Kong (CN); WANG, Ranshi, New Territories Hong Kong (CN); SHEN, Peihua, Guangzhou Guangdong 511340 (CN)
(74) Representative: Becker & Kurig Partnerschaft Patentanwälte PartmbB
(86) International application number: PCT/CN2017/101068
(87) International publication number: WO 2018/054231

(56) References cited:
- CN-A- 101 030 658
- CN-A- 102 324 549
- CN-A- 102 735 023
- CN-A- 105 115 250
- CN-A- 105 865 159
- CN-B- 102 735 023
- CN-B- 104 142 045
- US-A1- 2007 009 803

## Description

### FIELD OF THE INVENTION

The present invention relates to the field of batteries. In particular, this invention relates to methods for drying electrode assemblies of lithium-ion batteries and electrode assemblies made by the methods disclosed herein.

### BACKGROUND OF THE INVENTION

Lithium-ion batteries (LIBs) have attracted extensive attention in the past two decades for a wide range of applications in portable electronic devices such as cellular phones and laptop computers. Due to rapid market development of electric vehicles (EV) and grid energy storage, high-performance, low-cost LIBs are currently offering one of the most promising options for large-scale energy storage devices.

Currently, electrodes are prepared by dispersing fine powders of an active battery electrode material, a conductive agent, and a binder material in an appropriate solvent. The dispersion can be coated onto a current collector such as a copper or aluminum metal foil, and then dried at an elevated temperature to remove the solvent. Sheets of the cathode and anode are subsequently stacked or rolled with the separator separating the cathode and anode to form a battery.

The lithium-ion battery manufacturing process is sensitive to moisture. A battery with high water content leads to serious attenuation of electrochemical performance and affects stability of battery. Therefore, environmental humidity must be controlled strictly for the production process of LIBs. Most of the LIBs are produced in an environment with less than 1 percent humidity. However, significant cost is incurred because of the stringent moisture-free process. To address the moisture sensitive issue of electrode assembly, it is important to dry the electrode assembly prior to electrolyte filing so as to reduce the water content in the battery.

Chinese Patent No. 104142045 B describes a method of drying an electrode assembly of LIBs. The method comprises heating an electrode assembly under vacuum at a temperature of 30-100 °C; filling the oven with dry air or inert gas; repeating these two steps for 1-10 times. This method provides the electrode assembly with a water content between 430.5 ppm and 488.1 ppm.

Chinese Patent Application No. 105115250 A describes a method of drying an electrode assembly of LIBs. The method comprises heating an electrode assembly under vacuum at a temperature of 85±5 °C; filling the oven with hot, dry nitrogen gas; repeating these two steps for 10-20 times. This method provides the electrode assembly with a water content of less than 200 ppm.

Chinese Patent No. 102735023 B describes a method of drying an electrode assembly of LIBs. The method comprises heating an electrode assembly under vacuum at a temperature of 20-70 °C; filling the oven with dry air or nitrogen gas; repeating these two steps for 5-50 times. This method provides the electrode assembly with a water content between 110.1 ppm and 137.2 ppm.

Chinese Patent No. 103344097 B describes a method of drying an electrode assembly of LIBs. The method comprises heating an electrode assembly under vacuum at a temperature of 75-85 °C; filling the oven with a non-oxidizing gas; heating the electrode assembly to 75-85 °C; vacuum drying the electrode assembly again. However, this method does not provide the water content of the dried electrode assembly for evaluating the drying process. Documents CN105865159 A, CN104142045B, CN102735023 B and US2007009803 A1 disclose different methods for drying an electrode assembly.

The water contents of the electrode assemblies as dried by the existing methods range from a hundred ppm to several hundreds ppm, which may affect the cycling stability and rate capability of LIBs. In view of the above, there is always a need to develop a method for drying electrode assemblies of LIBs to low water content.

### SUMMARY OF THE INVENTION

The invention is defined in the claims. The aforementioned needs are met by a method according to claim 1. The dependent claims describe optional embodiments of the invention.

### BRIEF DESCRIPTION OF THE DRAWINGS

Figure 1 depicts an embodiment of the method disclosed herein.
Figure 2 depicts cycling performance of an electrochemical cell containing an electrode assembly prepared by the method described in Example 2.
Figure 3 depicts cycling performance of an electrochemical cell containing an electrode assembly prepared by the method described in Example 4.
Figure 4 depicts cycling performance of an electrochemical cell containing an electrode assembly prepared by the method described in Example 6.
Figure 5 depicts cycling performance of an electrochemical cell containing an electrode assembly prepared by the method described in Example 8.
Figure 6 depicts cycling performance of an electrochemical cell containing an electrode assembly prepared by the method described in Example 10.
Figure 7 depicts cycling performance of an electrochemical cell containing an electrode assembly prepared by the method described in Example 11.
Figure 8 depicts cycling performance of an electrochemical cell containing an electrode assembly prepared by the method described in Example 12.
Figure 9 depicts cycling performance of an electrochemical cell containing an electrode assembly prepared by the method described in Example 13.

### DETAILED DESCRIPTION OF THE INVENTION

Provided herein is a method of drying an electrode assembly, comprising the steps of:
1) stacking at least one anode, at least one cathode, and at least one separator interposed between the at least one anode and at least one cathode to prepare an electrode assembly;
2) placing the electrode assembly in a drying chamber;
3) drying the electrode assembly under vacuum at a temperature from about 80 °C to about 155 °C;
4) filling the drying chamber with dry air or inert gas; and
5) repeating steps 3) and 4) to obtain a dried electrode assembly,
wherein the water content of the dried electrode assembly is less than 20 ppm by weight, based on the total weight of the dried electrode assembly.

The term "electrode" refers to a "cathode" or an "anode."

The term "positive electrode" is used interchangeably with cathode. Likewise, the term "negative electrode" is used interchangeably with anode.

The term "binder material" refers to a chemical or a substance that can be used to hold the electrode material and conductive agent in place.

The term "water-based binder material" refers to a water-soluble or water-dispersible binder polymer. Some non-limiting examples of the water-based binder material include styrene-butadiene rubber, acrylated styrene-butadiene rubber, acrylonitrile-butadiene rubber, acryl rubber, butyl rubber, fluorine rubber, polytetrafluoroethylene, polyethylene, polypropylene, ethylene/propylene copolymers, polybutadiene, polyethylene oxide, polyvinylpyrrolidone, polyepichlorohydrin, polyphosphazene, polyacrylonitrile, polystyrene, ethylene/propylene/diene copolymers, polyvinylpyridine, chlorosulfonated polyethylene, latex, polyester resins, acrylic resins, phenolic resins, epoxy resins, polyvinyl alcohol, carboxymethyl cellulose, hydroxypropyl cellulose, and combinations thereof.

The term "organic-based binder material" refers to a binder dissolved or dispersed in an organic solvent, in particular, N-methyl-2-pyrrolidone (NMP). Some non-limiting examples of the organic-based binder material include polytetrafluoroethylene (PTFE), perfluoroalkoxy polymer (PFA), polyvinylidene fluoride (PVDF), copolymer of tetrafluoroethylene (TFE) and hexafluoropropylene (HFP), fluorinated ethylene-propylene (FEP) copolymer, and terpolymer of tetrafluoroethylene, hexafluoropropylene and vinylidene fluoride, and combinations thereof.

The term "current collector" refers to a support for coating the electrode material and a chemically inactive high electron conductor for keeping an electric current flowing to electrodes during discharging or charging a secondary battery.

The term "conductive agent" refers to a material which is chemically inactive and has good electrical conductivity. Therefore, the conductive agent is often mixed with an electrode active material at the time of forming an electrode to improve electrical conductivity of the electrode. In some embodiments, the conductive agent is a carbonaceous material.

The term "electrode assembly" refers to a structure comprising at least one positive electrode, at least one negative electrode, and at least one separator interposed between the positive electrode and the negative electrode.

The term "room temperature" refers to indoor temperatures from about 18 °C to about 30 °C, e.g., 18, 19, 20, 21, 22, 23, 24, 25, 26, 27, 28, 29, or 30 °C. In some embodiments, room temperature refers to a temperature of about 20 °C +/- 1 °C or +/- 2 °C or +/- 3 °C. In other embodiments, room temperature refers to a temperature of about 22 °C or about 25 °C.

The term "water content" and "moisture content" are used interchangeably.

The term "atmospheric pressure" refers to the pressure exerted by the weight of the atmosphere, which has a mean value of 101,325 Pa at sea level.

The term "C rate" refers to the charging or discharging rate of a cell or battery, expressed in terms of its total storage capacity in Ah or mAh. For example, a rate of 1 C means utilization of all of the stored energy in one hour; a 0.1 C means utilization of 10% of the energy in one hour or full energy in 10 hours; and a 5 C means utilization of full energy in 12 minutes.

The term "ampere-hour (Ah)" refers to a unit used in specifying the storage capacity of a battery. For example, a battery with 1 Ah capacity can supply a current of one ampere for one hour or 0.5 A for two hours, etc. Therefore, 1 Ampere-hour (Ah) is the equivalent of 3,600 coulombs of electrical charge. Similarly, the term "miniampere-hour (mAh)" also refers to a unit of the storage capacity of a battery and is 1/1,000 of an ampere-hour.

The term "battery cycle life" refers to the number of complete charge/discharge cycles a battery can perform before its nominal capacity falls below 80% of its initial rated capacity.

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, R^{L}, and an upper limit, R^{U}, is disclosed, any number falling within the range is specifically disclosed. In particular, the following numbers within the range are specifically disclosed: R=R^{L}+k^{∗}(R^{U}-R^{L}), wherein k is a variable ranging from 1 percent to 100 percent with a 1 percent increment, *i.e.,* k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

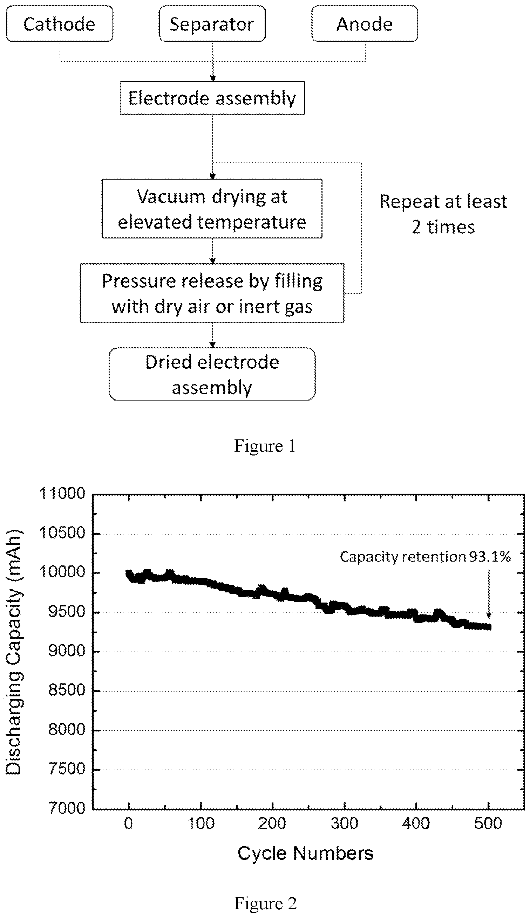

Figure 1 shows an embodiment of the method disclosed herein. An electrode assembly is made by stacking a plurality of anodes and a plurality of cathodes with separators interposed therebetween. The electrode assembly is dried in a drying chamber under vacuum at an elevated temperature. The drying chamber is then filled with hot, dry air. The steps of vacuum drying and pressure restoring are repeated until the desired water content is achieved.

Generally, lithium-ion battery manufacturing processes are carried out in dry rooms where the environment must be carefully controlled to preserve optimum production conditions. The dew point of the air is an indicator of the quality of the dry room. Typical dew point values for battery production range from -40 °C to -65 °C. Efficiency and service life of a battery are determined in the cell production stage.

An electrode assembly can be constructed by sequentially stacking at least one negative electrode, at least one separator, and at least one positive electrode. The number and arrangement of the at least one positive electrode, the at least one negative electrode, and the at least one separator, for configuring the electrode assembly are not particularly limited. In some embodiments, the electrode assembly has a stacked structure in which two outermost electrodes comprise an opposing polarities (i.e., a positive electrode and a negative electrode), such as a positive electrode/separator/negative electrode structure or a positive electrode/separator/negative electrode/separator/positive electrode/separator/negative electrode structure.

In some embodiments, disclosed is an electrode assembly for use in a nonaqueous electrolyte secondary battery. In certain embodiments, disclosed is an electrode assembly for use in a lithium-ion battery.

In certain embodiments, the electrode assembly has a stacked structure in which two outermost electrodes comprise the same polarity (i.e., positive electrodes or negative electrodes), such as a positive electrode/separator/negative electrode/separator/positive electrode structure or a negative electrode/separator/positive electrode/separator/negative electrode structure.

In some embodiments, the electrode assembly has a structure in which a separator is disposed on one of the outermost sides, such as a separator/positive electrode/separator/negative electrode structure or a positive electrode/separator/negative electrode/separator structure. In other embodiments, the electrode assembly has a structure in which separators are disposed on both the outermost sides, such as a separator/positive electrode/separator/negative electrode/separator structure.

In certain embodiments, the electrode assembly is assembled under strict humidity control in which the air has a dew point of -65 °C. In some embodiments, the electrode assembly is assembled under dry conditions in which the air has a dew point of - 50 °C, -40 °C, -30 °C, -20 °C, -10 °C, 0 °C, 5 °C, or 10 °C. In certain embodiments, the electrode assembly is assembled in the open air with no control of humidity.

In some embodiments, the assembling step for electrode assembly is not required to be carried out in a dry room. In some embodiments, the electrode assembly can be assembled under a relative humidity from about 40% to about 100%, from about 40% to about 90%, from about 40% to about 80%, from about 50% to about 100%, from about from about 50% to about 90%, from about 50% to about 80%, from about 60% to about 100%, or from about 60% to about 90%. In certain embodiments, the electrode assembly can be assembled under a relative humidity of more than 40%, more than 50%, more than 60%, more than 70%, or more than 80%. Generally, the prepared electrode assembly will be dried immediately after the assembling step. One of the advantages of the present invention is that the prepared electrode assembly is not required for immediate use. In some embodiments, the electrode assembly can be stored for at least 1 hour, 2 hours, 3 hours, 5 hours, 8 hours, 12 hours, 1 day, 2 days, 3 days, 4 days, 5 days, 6 days or 1week in the open air at room temperature under atmospheric pressure before the high temperature drying step. In other embodiments, the electrode assembly can be stored for at least 1 hour, 2 hours, 3 hours, 5 hours, 8 hours, 12 hours, 1 day, 2 days, 3 days, 4 days, 5 days, 6 days or 1 week at an elevated temperature (such as 40-60 °C) under atmospheric pressure before the high temperature drying step.

Another advantage of the present invention is that the prepared electrode can be stored at an elevated temperature (such as 40-60 °C) under atmospheric pressure for a relatively long time (such as 1-3 months) with uncontrolled humidity. Despite the relatively long storage time of the electrodes under uncontrolled humidity condition, the electrode assembly can still be dried to a desired low moisture content (such as below 20 ppm or even lower).

Before assembling the electrode assembly, a pre-drying step for cathode and/or anode is not required. Before assembling the electrode assembly, the water content of the electrodes is measured. In some embodiments, the water content of the electrodes are from about 100 ppm to about 1,000 ppm, from about 100 ppm to about 800 ppm, from about 100 ppm to about 600 ppm, from about 100 ppm to about 400 ppm, from about 100 ppm to about 200 ppm, or from about 200 ppm to about 600 ppm. In certain embodiments, the water content of electrodes are greater than 100 ppm, greater than 200 ppm, greater than 400 ppm, greater than 600 ppm, greater the 800 ppm, greater than 1,000 ppm, greater than 1,500 ppm, greater than 2,000 ppm, greater than 2,500 ppm or greater than 3,000 ppm.

The separator disposed between the opposing active anode and cathode surfaces can prevent contact between the anode and cathode and a short circuit of the lithium-ion battery. In some embodiments, the separator may comprise woven or nonwoven polymeric fibers, natural fibers, carbon fibers, glass fibers or ceramic fibers. In certain embodiments, the separator comprises woven or nonwoven polymeric fibers.

In some embodiments, the fibers of the nonwoven or woven are made of organic polymers, such as polyolefin, polyethylene (PE), high-density polyethylene, linear low-density polyethylene, low-density polyethylene, ultrahigh-molecular-weight polyethylene, polypropylene (PP), polypropylene/polyethylene co-polymer, polybutylene, polypentene, polyacetal, polyamide, polycarbonate, polyimide (PI), polyetherether ketone, polysulfones, polyphenylene oxide, polyphenylene sulfide, polyacrylonitrile, polyvinylidene fluoride, polyoxymethylene, polyvinyl pyrrolidone, polyester, polyethylene terephthalate (PET), polybutylene terephthalate, polyethylene naphthalene, polybutylene naphthalate, derivatives thereof, or a combination thereof. In certain embodiments, the separator is made of polyolefinic fibers selected from the group consisting of polyethylene, high-density polyethylene, linear low-density polyethylene, low-density polyethylene, ultrahigh-molecular-weight polyethylene, polypropylene, polypropylene/polyethylene co-polymer, and combinations thereof. In some embodiments, the separator is made of polymeric fibers selected from the group consisting of polyester, polyacetal, polyamide, polycarbonate, polyimide, polyetherether ketone, polyether sulfone, polyphenylene oxide, polyphenylene sulfide, polyethylene naphthalene, and combinations thereof. In other embodiments, the polymeric fiber is not polyethylene, high-density polyethylene, linear low-density polyethylene, low-density polyethylene, ultrahigh-molecular-weight polyethylene, polypropylene, or polypropylene/polyethylene co-polymer. In further embodiments, the polymeric fiber is not polyacetal, polyether sulfone, polyphenylene oxide, polyphenylene sulfide, or polycarbonate. In still further embodiments, polymeric fiber is not polyamide, polyimide, or polyetherether ketone. But all other known polymeric fibers or many natural fibers can be used as well.

In certain embodiments, the separator disclosed herein has a melting point of 100 °C or higher, 110 °C or higher, 120 °C or higher, 130 °C or higher, 140 °C or higher, 150 °C or higher, 160 °C or higher, 170 °C or higher, 180 °C or higher, 190 °C or higher, 200 °C or higher, 210 °C or higher, 220 °C or higher, 230 °C or higher, 240 °C or higher, or 250 °C or higher. In some embodiments, the separator has a melting point from about 100 °C to about 300 °C, from about 120 °C to about 300 °C, from about 100 °C to about 250 °C, from about 120 °C to about 250 °C, from about 140 °C to about 250 °C, from about 160 °C to about 250 °C, from about 180 °C to about 250 °C, or from about 200 °C to about 250 °C. The separator having high melting point shows high thermal stability and therefore can be dried at high temperature without thermally shrinking. This also allows the drying to be more efficiently performed. Therefore, the electrode assembly can be dried in a relatively short time, resulting in a short production time.

The separator can be in a coated or uncoated form. In some embodiments, the separator has a thickness from about 10 µm to about 200 µm, from about 30 µm to about 100 µm, from about 10 µm to about 75 µm, from about 10 µm to about 50 µm, from about 10 µm to about 20 µm, from about 15 µm to about 40 µm, from about 15 µm to about 35 µm, from about 20 µm to about 40 µm, from about 20 µm to about 35 µm, from about 20 µm to about 30 µm, from about 30 µm to about 60 µm, from about 30 µm to about 50 µm, or from about 30 µm to about 40 µm.

In certain embodiments, the separator has a thickness of about 15 µm, about 20 µm, or about 25 µm. In some embodiments, the separator of the present invention has a thickness of less than 40 µm, less than 35 µm, less than 30 µm, less than 25 µm, or less than 20 µm. If the separator is sufficiently thin, the moisture may be evaporated at high drying rates.

In some embodiments, the electrode assembly is loosely stacked. In the loosely stacked electrode assembly, there is a void space between the electrode layer and separator layer, allowing moisture to escape. Therefore, the loosely stacked electrode assembly can be effectively dried in a short period of time. On the other hand, when the electrode assembly is pressed under pressure before drying, the tightly packed electrode assembly has little or no void space between the electrode layer and separator layer, thus reducing airflow and drying efficiency.

In certain embodiments, the positive electrode, separator and negative electrode are stacked and spirally wound into a jelly-roll configuration before drying. Since a roll electrode assembly is tightly packed, there is also little or no void space between the electrode layer and separator layer, thus reducing airflow and drying efficiency. In some embodiments, the electrode assembly is not in a spirally-wound form.

A positive electrode includes a cathode electrode layer supported on a cathode current collector. The cathode electrode layer comprises at least a cathode material and a binder material. The cathode electrode layer may further comprise a conductive agent for enhancing electron conductivity of the cathode electrode layer. A negative electrode includes an anode electrode layer supported on an anode current collector. The anode electrode layer comprises at least an anode material and a binder material. The anode electrode layer may further comprise a conductive agent for enhancing electron conductivity of the anode electrode layer.

In some embodiments, the at least one cathode comprises a cathode current collector and a cathode electrode layer comprising a cathode material, a binder material and a conductive agent, and the at least one anode comprises an anode current collector and an anode electrode layer comprising an anode material, a binder material and a conductive agent, wherein each of the cathode and anode electrode layers independently has a void volume of less than 40%, less than 37%, less than 35%, less than 33%, less than 30%, less than 25%, less than 20%, less than 18%, less than 15%, less than 13%, less than 10%, or less than 8%, based on the total volume of the cathode or anode electrode layer. In certain embodiments, the void volume of the electrode layer is between 8% and 40%, between 8% and 35%, between 8% and 30%, between 10% and 30%, between 13% and 30%, between 13% and 33%, between 15% and 30%, between 18% and 30%, between 20% and 30%, or between 25% and 30%, based on the total volume of the cathode or anode electrode layer.

If the void volume of the electrode layer is 35% or more, both the energy density and power output of the battery are low. When the void volume of the electrode layer is between 10% and 35%, the battery exhibits good diffusibility of lithium ions and high-output performance.

The current collector acts to collect electrons generated by electrochemical reactions of the active battery electrode material or to supply electrons required for the electrochemical reactions. In some embodiments, each of the cathode and anode current collectors, which can be in the form of a foil, sheet or film, is independently stainless steel, titanium, nickel, aluminum, copper or electrically-conductive resin. In certain embodiments, the cathode current collector is an aluminum thin film. In some embodiments, the anode current collector is a copper thin film. In certain embodiments, the current collector is not subjected to a surface treatment.

In some embodiments, the current collector has a thickness from about 6 µm to about 100 µm. Thickness of the current collector will affect the volume occupied by the current collector within a battery and the amount of the electrode material and hence the capacity in the battery.

In certain embodiments, the thickness of each of the cathode and anode electrode layers on the current collector is independently from about 1 µm to about 300 µm, from about 10 µm to about 300 µm, from about 20 µm to about 100 µm, from about 1 µm to about 100 µm, from about 1 µm to about 50 µm, from about 1 µm to about 40 µm, from about 10 µm to about 40 µm, from about 10 µm to about 30 µm, or from about 10 µm to about 25 µm. In some embodiments, the thickness of the electrode layer on the current collector is about 10 µm, about 15 µm, about 20 µm, about 25 µm, about 30 µm, about 35 µm, or about 40 µm.

In some embodiments, the density of each of the cathode and anode electrode layers on the current collector is independently from about 1.0 g/cm³ to about 6.5 g/cm³, from about 1.0 g/cm³ to about 5.0 g/cm³, from about 1.0 g/cm³ to about 4.0 g/cm³, from about 1.0 g/cm³ to about 3.5 g/cm³, from about 1.0 g/cm³ to about 3.0 g/cm³, from about 1.0 g/cm³ to about 2.0 g/cm³, from about 2.0 g/cm³ to about 5.0 g/cm³, from about 2.0 g/cm³ to about 4.0 g/cm³, from about 3.0 g/cm³ to about 5.0 g/cm³, or from about 3.0 g/cm³ to about 6.0 g/cm³. Similarly, an increase in the density of the electrode layer will result in a reduction of void volume in the final electrode coating and a denser electrode, thereby achieving desired battery capacity.

In certain embodiments, the cathode material is selected from the group consisting of LiCoO₂ (LCO), LiNiO₂ (LNO), LiNiₓMn_{y}O₂, Li_{1+z}NiₓMn_{y}Co_{1-x-y}O₂, LiNiₓCo_{y}Al_{z}O₂, LiV₂O₅, LiTiS₂, LiMoS₂, LiMnO₂, LiCrO₂, LiMn₂O₄ (LMO), LiFeO₂, LiFePO₄ (LFP), LiNi_{0.5}Mn_{1.5}O₄, LiNi_{0.4}Mn_{1.6}O₄, and combinations thereof, wherein each x is independently from 0.3 to 0.8; each y is independently from 0.1 to 0.45; and each z is independently from 0 to 0.2. In certain embodiments, the cathode material is selected from the group consisting of LiCoO₂, LiNiO₂, LiNiₓMn_{y}O₂, Li_{1+z}NiₓMn_{y}Co_{1-x-y}O₂, LiNiₓCo_{y}Al_{z}O₂, LiV₂O₅, LiTiS₂, LiMoS₂, LiMnO₂, LiCrO₂, LiMn₂O₄, LiFeO₂, LiFePO₄, LiNi_{0.5}Mn_{1.5}O₄, LiNi_{0.4}Mn_{1.6}O₄, and combinations thereof, wherein each x is independently from 0.4 to 0.6; each y is independently from 0.2 to 0.4; and each z is independently from 0 to 0.1. In other embodiments, the cathode material is not LiCoO₂, LiNiO₂, LiV₂O₅, LiTiS₂, LiMoS₂, LiMnO₂, LiCrO₂, LiMn₂O₄, LiFeO₂, LiFePO₄, LiNi_{0.5}Mn_{1.5}O₄, or LiNi_{0.4}Mn_{1.6}O₄. In further embodiments, the cathode material is not LiNiₓMn_{y}O₂, Li_{1+z}NiₓMn_{y}Co_{1-x-y}O₂, or LiNiₓCo_{y}Al_{z}O₂, wherein each x is independently from 0.3 to 0.8; each y is independently from 0.1 to 0.45; and each z is independently from 0 to 0.2.

In certain embodiments, the cathode active material is a nickel-containing cathode active material. In some embodiments, the nickel-containing cathode active material is selected from the group consisting of Li₁₊ₓNiO₂, Li₁₊ₓNiₐMn_{b}O₂, Li₁₊ₓNiₐCo_{c}O₂, Li₁₊ₓNiₐMn_{b}Co_{c}O₂, Li₁₊ₓNiₐCo_{c}Al_{(1-a-c)}O₂, and combinations thereof, wherein 0≤x≤0.2, 0≤a≤1, 0≤b≤1, 0≤c≤1, and a+b+c≤1. In certain embodiments, the nickel-containing cathode active material is Li₁₊ₓNiₐMn_{b}Co_{c}O₂, wherein 0≤x≤0.2, 0.3≤a≤0.8, 0.1≤b≤0.3 and 0.1≤c≤0.3. In certain embodiments, the nickel-containing cathode active material is selected from the group consisting of LiNi_{0.33}Mn_{0.33}Co_{0.33}O₂ (NMC333), LiNi_{0.4}Mn_{0.4}Co_{0.2}O₂ (NMC442), LiNi_{0.5}Mn_{0.3}Co_{0.2}O₂ (NMC532), LiNi_{0.6}Mn_{0.2}Co_{0.2}O₂ (NMC622), LiNi_{0.7}Mn_{0.15}Co_{0.15}O₂, LiNi_{0.8}Mn_{0.1}Co_{0.1}O₂ (NMC811), Li_{0.9}Mn_{0.05}Co_{0.05}O₂, LiNi_{0.92}Mn_{0.04}Co_{0.04}O₂, LiNi_{0.8}Co_{0.15}Al_{0.05}O₂ (NCA), LiNi_{0.5}Mn_{0.5}O₂, LiNi_{0.6}Mn_{0.4}O₂, LiNi_{0.7}Mn_{0.3}O₂, LiNi_{0.8}Mn_{0.2}O₂, LiNi_{0.5}Co_{0.5}O₂, LiNi_{0.6}Co_{0.4}O₂, LiNi_{0.7}Co_{0.3}O₂, LiNi_{0.8}Co_{0.2}O₂, LiNiO₂, and combinations thereof. The nickel-containing composite oxide is relatively unstable in a moisture-containing environment. Therefore, performance of the cathode comprising the nickel-rich cathode active material is strongly affected by the residual moisture content in a battery.

In some embodiments, the anode material is selected from the group consisting of natural graphite particulate, synthetic graphite particulate, Sn (tin) particulate, Li₄Ti₅O₁₂ particulate, Si (silicon) particulate, Si-C composite particulate, and combinations thereof. In other embodiments, the anode material is not natural graphite particulate, synthetic graphite particulate, Sn (tin) particulate, Li₄Ti₅O₁₂ particulate, Si (silicon) particulate, or Si-C composite particulate.

In certain embodiments, the amount of each of the cathode and anode materials is independently at least 50%, at least 55%, at least 60%, at least 65%, at least 70%, at least 75%, at least 80%, at least 85%, at least 90%, or at least 95% by weight, based on the total weight of the cathode or anode electrode layer. In some embodiments, the amount of each of the cathode and anode materials is independently at most 50%, at most 55%, at most 60%, at most 65%, at most 70%, at most 75%, at most 80%, at most 85%, at most 90%, or at most 95% by weight, based on the total weight of the cathode or anode electrode layer.

In some embodiments, the conductive agent is selected from the group consisting of carbon, carbon black, graphite, expanded graphite, graphene, graphene nanoplatelets, carbon fibres, carbon nano-fibers, graphitized carbon flake, carbon tubes, carbon nanotubes, activated carbon, mesoporous carbon, and combinations thereof. In certain embodiments, the conductive agent is not carbon, carbon black, graphite, expanded graphite, graphene, graphene nanoplatelets, carbon fibres, carbon nano-fibers, graphitized carbon flake, carbon tubes, carbon nanotubes, activated carbon, or mesoporous carbon.

In certain embodiments, the amount of the conductive agent in each of the cathode and anode electrode layers is independently at least 1%, at least 2%, at least 3%, at least 4%, at least 5%, at least 10%, at least 15%, at least 20%, at least 25%, at least 30%, at least 35%, at least 40%, at least 45%, or at least 50% by weight, based on the total weight of the cathode or anode electrode layer. In some embodiments, the amount of the conductive agent in each of the cathode and anode electrode layers is independently at most 1%, at most 2%, at most 3%, at most 4%, at most 5%, at most 10%, at most 15%, at most 20%, at most 25%, at most 30%, at most 35%, at most 40%, at most 45%, or at most 50% by weight, based on the total weight of the cathode or anode electrode layer.

In some embodiments, the amount of the conductive agent in each of the cathode and anode electrode layers is independently from about 0.05 wt.% to about 0.5 wt.%, from about 0.1 wt.% to about 1 wt.%, from about 0.25 wt.% to about 2.5 wt.%, from about 0.5 wt.% to about 5 wt.%, from about 2 wt.% to about 5 wt.%, from about 3 wt.% to about 7 wt.%, or from about 5 wt.% to about 10 wt.%, based on the total weight of the cathode or anode electrode layer.

An electrode slurry is prepared by dispersing an electrode active material, a binder material and a conductive agent in a solvent. In some embodiments, the solvent is an aqueous solvent or organic solvent. In certain embodiments, the aqueous solvent is water. In some embodiments, the organic solvent is N-methyl-2-pyrrolidone (NMP), dimethylformamide, dimethylacetamide, dimethyl sulfoxide or tetrahydrofuran. In certain embodiments, the solvent is not N-methyl-2-pyrrolidone, dimethylformamide, dimethylacetamide, dimethyl sulfoxide, or tetrahydrofuran. In some embodiments, the solvent is not a mixture of N-methyl-2-pyrrolidone and water.

The electrode slurry is coated onto the current collector to form a coated layer on the current collector. The coated current collector is then dried to prepare an electrode. The electrode slurry is dried at a temperature below 90 °C to prevent the slurry to be dried too quickly which may lead to cracking of the electrode layer. In some embodiments, the coated layer is dried at a temperature from about 40 °C to about 90 °C, from about 40 °C to about 80 °C, from about 40 °C to about 70 °C, from about 40 °C to about 60 °C, from about 50 °C to about 90 °C, from about 50 °C to about 80 °C, or from about 50 °C to about 70 °C. In certain embodiments, the coated layer is dried at a temperature less than about 90 °C, less than about 80 °C, less than about 70 °C, less than about 60 °C, or less than about 50 °C. In some embodiments, the coated layer is dried at about 40 °C, about 50 °C, about 60 °C, about 70 °C, about 80 °C, or about 90 °C.

After assembling the electrode assembly, the electrode assembly is placed into a drying chamber. In some embodiments, the drying chamber is connected to a vacuum pump, so that the pressure in the chamber can be reduced. The pressure is reduced sufficiently so as to lower the boiling point of water. The drying time can therefore be considerably reduced. In certain embodiments, the drying chamber is connected to a central vacuum supply, thereby allowing several vacuum drying ovens to be operated simultaneously. In some embodiments, the number of vacuum drying ovens connected to a central vacuum supply ranges from 1 to 20 depending on the number of pumps operated. In certain embodiments, a vacuum pump or central vacuum supply is connected to the drying chamber by a suction line equipped with a gas outlet valve. In some embodiments, the drying chamber is also connected to a gas reservoir containing dry air or inert gas by a duct equipped with a gas inlet valve. When the gas outlet valve is closed and the gas inlet valve is opened, vacuum is lost in the drying chamber. The valve might be of a solenoid or needle type or a mass flow controller. Any devices allowing an appropriate flow adjustment might be used.

To reduce the power required for the pumps, a condenser can be provided between the drying chamber and the pump. The condenser condenses out water vapor, which is then separated.

Drying at low temperature cannot efficiently remove water from the electrode assembly. However, electrode layer will become embrittled and easily cracked when subjected to high drying temperatures. In certain embodiments, the electrode assembly can be dried under vacuum at a temperature from about 70 °C to about 155 °C, from about 80 °C to about 155 °C, from about 90 °C to about 155 °C, from about 100 °C to about 155 °C, from about 100 °C to about 140 °C, from about 100 °C to about 130 °C, from about 100 °C to about 120 °C, from about 100 °C to about 110 °C, or from about 110 °C to about 130 °C. In certain embodiments, the electrode assembly can be dried under vacuum at a temperature from about 80 °C to about 155 °C. In some embodiments, the electrode assembly can be dried under vacuum at a temperature of about 80 °C or higher, about 90 °C or higher, about 100 °C or higher, about 110 °C or higher, about 120 °C or higher, about 130 °C or higher, about 140 °C or higher, or about 150 °C or higher. In certain embodiments, the electrode assembly can be dried under vacuum at a temperature of less than 155 °C, less than 150 °C, less than 145 °C, less than 140 °C, less than 135 °C, less than 130 °C, less than 125 °C, less than 120 °C, less than 115 °C, less than 110 °C, less than 105 °C, less than 100 °C, or less than 90 °C.

In some embodiments, the time period for drying the electrode assembly under vacuum is from about 5 minutes to about 12 hours, from about 5 minutes to about 4 hours, from about 5 minutes to about 2 hours, from about 5 minutes to about 1 hour, from about 5 minutes to about 30 minutes, from about 5 minutes to about 15 minutes, from about 15 minutes to about 1 hour, from about 15 minutes to about 3 hours, from about 1 hour to about 10 hours, from about 1 hour to about 8 hours, from about 1 hour to about 6 hours, from about 1 hour to about 4 hours, from about 1 hour to about 2 hours, from about 2 hours to about 12 hours, from about 2 hours to about 8 hours, from about 2 hours to about 5 hours, from about 2 hours to about 3 hours, or from about 4 hours to about 12 hours. In certain embodiments, the time period for drying the electrode assembly under vacuum is from about 5 minutes to about 2 hours, or from about 15 minutes to about 30 minutes. In some embodiments, the time period for drying the electrode assembly under vacuum is at least 15 minutes, at least 30 minutes, at least 1 hour, at least 1.5 hours, at least 2 hours, at least 3 hours, at least 4 hours, or at least 5 hours. In certain embodiments, the time period for drying the electrode assembly under vacuum is less than 5 hours, less than 4 hours, less than 3 hours, less than 2 hours, less than 1.5 hours, less than 1 hour, or less than 30 minutes.

Any vacuum pumps that can reduce the pressure of the drying chamber can be used herein. Some non-limiting examples of the vacuum pumps include dry vacuum pumps, turbo pumps, rotary vane vacuum pumps, cryogenic pumps, and sorption pumps.

In some embodiments, the vacuum pump is an oil free pump. The oil free pump operates without the need for oil in the pump parts which are exposed to gases being pumped, or partial vacuum. Thus, any gases backstreaming through the pump are free from oil vapour. Progressive oil vapour deposited on surfaces of the electrode assembly may reduce the electrochemical performance of a battery. An example of such pump is a diaphragm vacuum pump.

In certain embodiments, high vacuum can be achieved by using a two-stage pumping system to evacuate the drying chamber. The pumping system comprises a primary vacuum pump such as a rotary pump or diaphragm pump arranged in series with a high vacuum pump such as a turbo-molecular pump.

In some embodiments, the electrode assembly is dried under atmospheric pressure. In certain embodiments, the drying is performed in a vacuum state. In some embodiments, the vacuum state is maintained at a pressure within the range from about 1×10⁴ Pa to about 5×10⁴ Pa, from about 1×10⁴ Pa to about 2.5×10⁴ Pa, from about 1×10⁻⁴ Pa to about 1×10⁴ Pa, from about 1×10⁴ Pa to about 5×10³ Pa, from about 1×10⁴ Pa to about 3×10³ Pa, from about 1×10⁻⁴ Pa to about 2×10³ Pa, from about 1×10⁻⁴ Pa to about 1×10³ Pa, from about 1×10³ Pa to about 5×10⁴ Pa, from about 1×10³ Pa to about 1×10⁴ Pa, from about 1×10³ Pa to about 5×10³ Pa, from about 1×10³ Pa to about 3×10³ Pa, or from about 1×10³ Pa to about 2×10³ Pa. In certain embodiments, the vacuum state is maintained at a pressure less than about 5×10⁴ Pa, less than about 2.5×10⁴ Pa, less than about 1×10⁴ Pa, less than about 5×10³ Pa, less than about 3×10³ Pa, less than about 2×10³ Pa, or less than about 1×10³ Pa. In some embodiments, the vacuum state is maintained at about 5×10⁴ Pa, about 2.5×10⁴ Pa, about 1×10⁴ Pa, about 5×10³ Pa, about 3×10³ Pa, about 2×10³ Pa, or about 1×10³ Pa.

After a predetermined drying time period, the drying chamber vents directly to a gas reservoir containing dry air or inert gas via a gas inlet valve. Gas filling can enhance the removal of water vapour from the drying chamber, thereby increasing the removal efficiency of water from the electrode assembly and shorten the drying cycle. In some embodiments, the gas reservoir is a nitrogen gas cylinder. In certain embodiments, the inert gas is selected from the group consisting of helium, argon, neon, krypton, xenon, nitrogen, carbon dioxide, and combinations thereof. In some embodiments, the water content of the dry air or inert gas is maintained at a level of less than or equal to 10 ppm, less than or equal to 8 ppm, less than or equal to 5 ppm, less than or equal to 4 ppm, less than or equal to 3 ppm, less than or equal to 2 ppm, or less than or equal to 1 ppm.

In some embodiments, the dry air or inert gas is preheated before entering the drying chamber. In certain embodiments, the temperature of the dry air or inert gas is from about 70 °C to about 130 °C, from about 70 °C to about 110 °C, from about 70 °C to about 100 °C, from about 70 °C to about 90 °C, from about 70 °C to about 80 °C, from about 80 °C to about 155 °C, from about 80 °C to about 120 °C, from about 80 °C to about 100 °C, from about 90 °C to about 155 °C, from about 90 °C to about 130 °C, from about 90 °C to about 100 °C, from about 70 °C to about 155 °C, from about 100 °C to about 130 °C, or from about 100 °C to about 120 °C. In some embodiments, the dry air or inert gas is preheated to a temperature from about 70 °C to about 155 °C before entering the drying chamber. In certain embodiments, the dry air or inert gas is preheated to at least 70 °C, at least 80 °C, at least 90 °C, at least 100 °C, at least 110 °C, or at least 120 °C.

In certain embodiments, the dry air or inert gas stays in the drying chamber for a time period from about 30 seconds to about 2 hours, from about 1 minute to about 1 hour, from about 5 minutes to about 30 minutes, from about 5 minutes to about 15 minutes, from about 5 minutes to about 10 minutes, from about 10 minutes to about 30 minutes, from about 10 minutes to about 20 minutes, from about 10 minutes to about 15 minutes, from about 15 minutes to about 1 hour, from about 15 minutes to about 30 minutes, from about 15 minutes to about 20 minutes, or from about 30 minutes to about 1 hour. In some embodiments, the dry air or inert gas stays in the drying chamber for a time period from about 30 seconds to about 2 hours, from about 5 minutes to about 2 hours, or from about 15 minutes to about 30 minutes. In certain embodiments, the dry air or inert gas stays in the drying chamber for at least 30 seconds, at least 1 minute, at least 5 minutes, at least 10 minutes, at least 15 minutes, at least 20 minutes, at least 25 minutes, at least 30 minutes, or at least 1 hour. In other embodiments, the dry air or inert gas stays in the drying chamber for less than 5 minutes, less than 10 minutes, less than 15 minutes, less than 20 minutes, less than 25 minutes, less than 30 minutes, or less than 1 hour.

In some embodiments, the electrode assembly can be further dried under vacuum after incubating the electrode assembly with the dry gas for a predetermined time. This procedure can be repeated as many times as required to reduce the moisture content of the electrode assembly to an appropriate level. In certain embodiments, this procedure can be repeated around 2 to 50 times until the moisture content in the electrode assembly is less than 50 ppm, less than 40 ppm, less than 30 ppm, less than 20 ppm, less than 19 ppm, less than 18 ppm, less than 17 ppm, less than 16 ppm, less than 15 ppm, less than 14 ppm, less than 13 ppm, less than 12 ppm, less than 11 ppm, less than 10 ppm, less than 9 ppm, less than 8 ppm, less than 7 ppm, less than 6 ppm, or less than 5 ppm by weight, based on the total weight of the dried electrode assembly.

In certain embodiments, the steps of vacuum drying and gas filling can be repeated at least 2 times, at least 3 times, at least 4 times, at least 5 times, at least 6 times, at least 7 times, at least 8 times, at least 9 times, at least 10 times, at least 12 times, at least 14 times, at least 16 times, at least 18 times, at least 20 times, at least 22 times, at least 24 times, at least 26 times, at least 28 times, or at least 30 times. In some embodiments, the steps of vacuum drying and gas filling can be repeated less than 30 times, less than 28 times, less than 26 times, less than 24 times, less than 22 times, less than 20 times, less than 18 times, less than 16 times, less than 14 times, less than 12 times, less than 10 times, less than 8 times, or less than 6 times. In certain embodiments, the steps of vacuum drying and gas filling can be repeated between 2 and 50 times, between 2 and 40 times, between 2 and 30 times, between 2 and 20 times, between 2 and 10 times, between 5 and 30 times, between 5 and 20 times, or between 5 and 10 times. In other embodiments, the steps of vacuum drying and gas filling can be repeated between 2 or more times.

In some embodiments, the process for drying the electrode assembly comprises vacuum drying, followed by hot air drying. In some embodiments, the drying chamber blows hot air toward the electrode assembly from above and/or underneath. In certain embodiments, the hot air drying is performed at an air velocity from about 1 meter/second to about 50 meters/second, from about 1 meter/second to about 40 meters/second, from about 1 meter/second to about 30 meters/second, from about 1 meter/second to about 20 meters/second, from about 1 meter/second to about 10 meters/second, from about 10 meters/second to about 50 meters/second, from about 10 meters/second to about 40 meters/second, from about 10 meters/second to about 30 meters/second, from about 10 meters/second to about 20 meters/second, from about 20 meters/second to about 30 meters/second, from about 30 meters/second to about 40 meters/second, or from about 40 meters/second to about 50 meters/second. In other embodiments, a heated inert gas (i.e., helium, argon) is used instead of heated air.

The drying gas might be preheated through heat exchange surfaces. In some embodiments, the temperature of the hot air ranges from about 50 °C to about 155 °C, from about 60 °C to about 150 °C, from about 80 °C to about 150 °C, from about 100 °C to about 150 °C, from about 70 °C to about 150 °C, from about 70 °C to about 130 °C, from about 70 °C to about 100 °C, from about 80 °C to about 150 °C, from about 80 °C to about 130 °C, from about 80 °C to about 110 °C, from about 100 °C to about 140 °C, or from about 100 °C to about 120 °C. In certain embodiments, the temperature of the hot air is at least 70 °C, at least 80 °C, at least 90 °C, at least 100 °C, at least 110 °C, or at least 120 °C.

In certain embodiments, the time period for hot air drying is from about 1 minute to about 2 hours, from about 1 minute to about 1 hour, from about 1 minute to about 30 minutes, from about 1 minute to about 15 minutes, from about 5 minutes to about 30 minutes, from about 5 minutes to about 20 minutes, from about 5 minute to about 15 minutes, from about 5 minutes to about 10 minutes, from about 10 minutes to about 1 hour, from about 10 minutes to about 30 minutes, from about 10 minutes to about 20 minutes, from about 15 minutes to about 1 hour, or from about 15 minutes to about 30 minutes.

In some embodiments, the electrode assembly can be further dried under vacuum after blowing hot air for a predetermined time. This procedure can be repeated as many times as required to reduce the moisture content of the electrode assembly to an appropriate level, such as 50 ppm, 40 ppm, 30 ppm, 20 ppm, 19 ppm, 18 ppm, 17 ppm, 16 ppm, 15 ppm, 14 ppm, 13 ppm, 12 ppm, 11 ppm, 10 ppm, 9 ppm, 8 ppm, 7 ppm, 6 ppm or 5 ppm.

In certain embodiments, the total processing time of steps 3-5 is from about 10 hours to about 40 hours, from about 10 hours to about 35 hours, from about 10 hours to about 30 hours, from about 10 hours to about 25 hours, from about 10 hours to about 20 hours, from about 10 hours to about 15 hours, from about 15 hours to about 30 hours, from about 15 hours to about 25 hours, from about 15 hours to about 20 hours, or from about 20 hours to about 30 hours. In some embodiments, the total processing time of steps 3-5 is less than about 40 hours, less than about 35 hours, less than about 30 hours, less than about 25 hours, less than about 20 hours, or less than about 15 hours. In certain embodiments, the total processing time of steps 3-5 is at least about 10 hours, at least about 15 hours, at least about 20 hours, at least about 25 hours, at least about 30 hours, or at least about 35 hours.

Various attempts have been made to reduce the water content of an electrode assembly. For instance, an undried electrode assembly is immersed in an organic solvent. After a designated immersion period, the electrode assembly were removed from the organic solvent, placed into a vacuum drying chamber, and dried. The drying chamber can be backfilled with the inert gas and the drying step can be repeated. Some non-limiting examples of the organic solvent include chloroform, tetrachloromethane, benzene, acrylonitrile, ethyl carbonate, 1,2-dichloroethane, acetonitrile, diethyl ether and carbon disulphide. Immersing the electrode assembly in an organic solvent allows trapped water to be displaced by the bulk solvent. It is found that the electrode assembly can be efficiently dried. However, pore closure in separator is also observed due to dissolution of the polymer material in the organic solvent even under a short time period (such as a few seconds) of immersion of the electrode assembly. The rate of dissolution of the polymer is accelerated at a high drying temperature. This will decrease or even stop ionic flow between the anode and cathode and hence performance of a battery is significantly affected. Furthermore, the mechanical strength of the separator may also be affected due to solvent damage to the separator. The mechanical integrity of a battery separator is critical for prevention of internal short circuit. Therefore, the safety performance of the battery may also be affected. In addition, residual amounts of the organic solvent in the dried electrode assembly may also damage the separator.

One of the advantages of the present invention is that the electrode assembly can be dried to a water content of about 20 ppm or even lower without the assistance of any organic solvents. In some embodiments, the dried electrode assembly is free of an organic solvent. In certain embodiments, the dried electrode assembly is free of chloroform, tetrachloromethane, benzene, acrylonitrile, ethyl carbonate, 1,2-dichloroethane, acetonitrile, diethyl ether, carbon disulphide, or a combination thereof. In certain embodiments, the dried electrode assembly comprises an organic solvent in an amount less than about 100 ppm, less than about 50 ppm, less than about 40 ppm, less than about 30 ppm, less than about 20 ppm, less than about 10 ppm, less than about 5 ppm, less than about 4 ppm, less than about 3 ppm, less than about 2 ppm, less than about 1 ppm, or less than about 0.5 ppm by weight, based on the total weight of the dried electrode assembly.

Currently, water is the key factor needed to be strictly controlled in the organic-based production process of lithium-ion batteries. A battery with high water content may lead to serious attenuation of electrochemical performance and affect stability of battery.

The advantages of the present invention is that most of the fabrication can take place outside a dry room. In some embodiments, the assembling process can take place outside a dry room or a glove box. In certain embodiments, only the step for filling electrolyte or both the steps for drying the electrode assembly and filing electrolyte are carried out in a dry room or a glove box. Thus, humidity control in the factory can be avoided, significantly lowering the investment cost.

The presence of moisture is detrimental to the operation of a battery. Generally, water content in the electrode assembly prepared by conventional methods contains an amount of water greater than 100 ppm by weight, based on the total weight of the electrode assembly. Even if the initial battery performance is acceptable, the rate of deterioration of the battery performance may be unacceptable. To be able to achieve sufficiently high battery performance, it would therefore be advantageous to have a low water content in the battery.

In some embodiments, the water content of the electrode assembly before drying is more than 100 ppm, more than 200 ppm, more than 300 ppm, more than 400 ppm, more than 500 ppm, more than 1,000 ppm, more than 2,000 ppm, more than 3,000 ppm, more than 4,000 ppm, more than 5,000 ppm, or more than 10,000 ppm by weight, based on the total weight of the electrode assembly before drying.

In certain embodiments, the drying method can reduce the water content of the electrode assembly from a few thousand ppm to less than 20 ppm. In some embodiments, the drying method can reduce the water content of the electrode assembly from a few hundred ppm to less than 20 ppm. The electrode assembly prepared by the method disclosed herein has a particularly low water content, contributing to reliable performance of the lithium-ion batteries. In some embodiments, the water content of the dried electrode assembly is less than the water content of the undried electrode assembly. In some embodiments, the water content in the dried electrode assembly is from about 5 ppm to about 50 ppm, from about 5 ppm to about 40 ppm, from about 5 ppm to about 30 ppm, from about 5 ppm to about 20 ppm, from about 5 ppm to about 15 ppm, from about 5 ppm to about 10 ppm, from about 3 ppm to about 30 ppm, from about 3 ppm to about 20 ppm, from about 3 ppm to about 15 ppm, or from about 3 ppm to about 10 ppm by weight, based on the total weight of the dried electrode assembly.

In certain embodiments, the water content in the dried electrode assembly is less than 50 ppm, less than 40 ppm, less than 30 ppm, less than 20 ppm, less than 19 ppm, less than 18 ppm, less than 17 ppm, less than 16 ppm, less than 15 ppm, less than 14 ppm, less than 13 ppm, less than 12 ppm, less than 11 ppm, less than 10 ppm, less than 9 ppm, less than 8 ppm, less than 7 ppm, less than 6 ppm, less than 5 ppm, less than 4 ppm, less than 3 ppm, less than 2 ppm, or less than 1 ppm by weight, based on the total weight of the dried electrode assembly. In some embodiments, the dried electrode assembly disclosed herein has a water concentration therein no greater than about 5 ppm by weight, based on the total weight of the dried electrode assembly.

In some embodiments, the undried electrode assembly comprises at least one undried anode and at least one undried cathode. In certain embodiments, each of the at least one undried anode and the at least one undried cathode has a water content of more than 5 ppm, more than 6 ppm, more than 7 ppm, more than 8 ppm, more than 9 ppm, more than 10 ppm, more than 11 ppm, more than 12 ppm, more than 13 ppm, more than 14 ppm, more than 15 ppm, more than 16 ppm, more than 17 ppm, more than 18 ppm, more than 19 ppm, more than 20 ppm, more than 30 ppm, more than 40 ppm, more than 50 ppm, more than 100 ppm, more than 200 ppm, more than 300 ppm, more than 400 ppm, more than 500 ppm, more than 1,000 ppm, more than 2,000 ppm, more than 3,000 ppm, more than 4,000 ppm, more than 5,000 ppm, or more than 10,000 ppm by weight, based on the total weight of the at least one undried anode and the at least one undried cathode.

In some embodiments, the dried electrode assembly comprises at least one dried anode and at least one dried cathode, wherein the at least one dried anode and at least one dried cathode have a water content of less than 50 ppm, less than 40 ppm, less than 30 ppm, less than 20 ppm, less than 19 ppm, less than 18 ppm, less than 17 ppm, less than 16 ppm, less than 15 ppm, less than 14 ppm, less than 13 ppm, less than 12 ppm, less than 11 ppm, less than 10 ppm, less than 9 ppm, less than 8 ppm, less than 7 ppm, less than 6 ppm, or less than 5 ppm by weight, based on the total weight of the at least one dried anode and at least one dried cathode.

In certain embodiments, the undried electrode assembly comprises at least one undried separator. In some embodiments, the at least one undried separator has a water content of more than 5 ppm, more than 6 ppm, more than 7 ppm, more than 8 ppm, more than 9 ppm, more than 10 ppm, more than 11 ppm, more than 12 ppm, more than 13 ppm, more than 14 ppm, more than 15 ppm, more than 16 ppm, more than 17 ppm, more than 18 ppm, more than 19 ppm, more than 20 ppm, more than 30 ppm, more than 40 ppm, more than 50 ppm, more than 100 ppm, more than 200 ppm, more than 300 ppm, more than 400 ppm, more than 500 ppm, more than 600 ppm, more than 700 ppm, more than 800 ppm, more than 900 ppm, more than 1,000 ppm, more than 1,500 ppm, more than 2,000 ppm, more than 3,000 ppm, more than 4,000 ppm, more than 5,000 ppm, or more than 10,000 ppm by weight, based on the total weight of the at least one undried separator.

In some embodiments, the water content of the at least one dried separator is less than the water content of the at least one undried separator. In certain embodiments, the dried electrode assembly comprises at least one dried separator, wherein the at least one dried separator has a water content of less than 50 ppm, less than 40 ppm, less than 30 ppm, less than 20 ppm, less than 19 ppm, less than 18 ppm, less than 17 ppm, less than 16 ppm, less than 15 ppm, less than 14 ppm, less than 13 ppm, less than 12 ppm, less than 11 ppm, less than 10 ppm, less than 9 ppm, less than 8 ppm, less than 7 ppm, less than 6 ppm, or less than 5 ppm by weight, based on the total weight of the at least one dried separator.

After the drying step, the electrode assembly can then be naturally cooled to 50 °C or less before being removed from the drying chamber. In some embodiments, the electrode assembly is cooled to 45 °C or less, 40 °C or less, 35 °C or less, 30 °C or less, or 25 °C or less before being removed from the drying chamber. In certain embodiments, the electrode assembly is cooled to room temperature. In certain embodiments, the electrode assembly is cooled down by blowing a dry gas or inert gas in order to reach the target temperature more quickly.

The binder material in the electrode layer performs a role of binding the electrode material and conductive agent together on the current collector. In certain embodiments, each of the at least one anode and at least one cathode independently comprises a binder material selected from the group consisting of an organic-based binder material, a water-based binder material and a mixture of water-based and organic-based binder materials.

In some embodiments, each of the binder materials in the cathode and anode electrode layers is independently selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acryl rubber, butyl rubber, fluorine rubber, polytetrafluoroethylene, polyethylene, polypropylene, ethylene/propylene copolymers, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resins, phenolic resins, epoxy resins, carboxymethyl cellulose, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, polymethacrylic acid, polymethacrylate, polyacrylamide, polyurethane, fluorinated polymer, chlorinated polymer, a salt of alginic acid, polyvinylidene fluoride, poly(vinylidene fluoride)-hexafluoropropene, and combinations thereof. In further embodiments, the salt of alginic acid comprises a cation selected from Na, Li, K, Ca, NH₄, Mg, Al, or a combination thereof.

In certain embodiments, each of the binder materials in the cathode and anode electrode layers is independently selected from the group consisting of styrene-butadiene rubber, carboxymethyl cellulose, polyvinylidene fluoride, acrylonitrile copolymer, polyacrylic acid, polyacrylonitrile, poly(vinylidene fluoride)-hexafluoropropene, latex, a salt of alginic acid, and combinations thereof.

In some embodiments, each of the binder materials in the cathode and anode electrode layers is independently selected from SBR, CMC, PAA, a salt of alginic acid, or a combination thereof. In certain embodiments, each of the binder materials in the cathode and anode electrode layers is independently acrylonitrile copolymer. In some embodiments, each of the binder materials in the cathode and anode electrode layers is independently polyacrylonitrile. In certain embodiments, each of the binder materials in the cathode and anode electrode layers independently is free of styrene-butadiene rubber, carboxymethyl cellulose, polyvinylidene fluoride, acrylonitrile copolymer, polyacrylic acid, polyacrylonitrile, poly(vinylidene fluoride)-hexafluoropropene, latex, or a salt of alginic acid.

In certain embodiments, the amount of the binder material in each of the cathode and anode electrode layers is independently at least 1%, at least 2%, at least 3%, at least 4%, at least 5%, at least 10%, at least 15%, at least 20%, at least 25%, at least 30%, at least 35%, at least 40%, at least 45%, or at least 50% by weight, based on the total weight of the cathode or anode electrode layer. In some embodiments, the amount of the binder material in each of the cathode and anode electrode layers is independently at most 1%, at most 2%, at most 3%, at most 4%, at most 5%, at most 10%, at most 15%, at most 20%, at most 25%, at most 30%, at most 35%, at most 40%, at most 45%, or at most 50% by weight, based on the total weight of the cathode or anode electrode layer.

In some embodiments, the amount of the binder material in each of the cathode and anode electrode layers is independently is from about 2 wt.% to about 10 wt.%, from about 3 wt.% to about 6 wt.%, from about 5 wt.% to about 10 wt.%, from about 7.5 wt.% to about 15 wt.%, from about 10 wt.% to about 20 wt.%, from about 15 wt.% to about 25 wt.%, from about 20 wt.% to about 40 wt.%, or from about 35 wt.% to about 50 wt.%, based on the total weight of the cathode or anode electrode layer.

In order to prevent moisture from being present within the sealed container, the step of filling electrolyte is carried out in a dry room. After drying, the electrode assembly is placed inside a container and then an electrolyte is added to fill the pores of all of the layers of separator and electrodes, and each of the gaps between the positive and negative electrodes and the separator in the electrode assembly under an inert atmosphere before sealing.

The method disclosed herein reduces the production costs of lithium-ion batteries by consuming less energy and shortens manufacturing times needed for drying. Therefore, this method is especially suited for industrial processes because of its low cost and ease of handling.

In another aspect, provided herein is an electrode assembly prepared by the method disclosed herein for a nonaqueous electrolyte secondary battery, comprising at least one anode, at least one cathode and at least one separator interposed between the at least one anode and at least one cathode, wherein the water content of the electrode assembly is less than 20 ppm by weight, based on the total weight of the electrode assembly. In some embodiments, the water content of the electrode assembly is less than 20 ppm, less than 19 ppm, less than 18 ppm, less than 17 ppm, less than 16 ppm, less than 15 ppm, less than 14 ppm, less than 13 ppm, less than 12 ppm, less than 11 ppm, less than 10 ppm, less than 9 ppm, less than 8 ppm, less than 7 ppm, less than 6 ppm, or less than 5 ppm by weight, based on the total weight of the electrode assembly.

In some embodiments, the at least one cathode comprises a cathode current collector and a cathode electrode layer comprising a cathode material, a binder material and a conductive agent, and the at least one anode comprises an anode current collector and an anode electrode layer comprising an anode material, a binder material and a conductive agent, wherein each of the cathode and anode electrode layers independently has a void volume of less than 40%, less than 35%, less than 33%, less than 30%, less than 25%, less than 20%, or less than 15%, based on the total volume of the cathode or anode electrode layer.

In certain embodiments, the lithium battery is able to retain at least about 80%, at least about 85 %, or at least 90 % of its initial storage capacity after 1,000 cycles at a rate of 1C at room temperature in a full cell. In some embodiments, the lithium battery is able to retain at least about 80 %, or at least about 85 % of its initial storage capacity after 1,500 cycles at a rate of 1C at room temperature in a full cell.

Also provided herein is a lithium battery comprising the electrode assembly prepared by the method disclosed herein.

The following examples are presented to exemplify embodiments of the invention. All numerical values are approximate. When numerical ranges are given, it should be understood that embodiments outside the stated ranges may still fall within the scope of the invention. Specific details described in each example should not be construed as necessary features of the invention.

### EXAMPLES

The water content in the electrode assembly was measured by Karl-fisher titration. The electrode assembly was cut into small pieces of 1 cm x 1 cm in a glove box filled with argon gas. The cut electrode assembly having a size of 1 cm x 1 cm was weighed in a sample vial. The weighed electrode assembly was then added into a titration vessel for Karl Fischer titration using Karl Fischer coulometry moisture analyzer (831 KF Coulometer, Metrohm, Switzerland). Measurement was repeated three times to find the average value.

The water content in the electrodes or separator was measured by Karl-fisher titration. The electrode assembly was cut into small pieces of 1 cm x 1 cm in a glove box filled with argon gas. The electrode assembly was separated into the anode, cathode and separator layers. The water contents of the separated electrode layers and separator layers were analysed separately by Karl Fischer titration. Measurement was repeated three times to find the average value.

### Example 1

### A) Preparation of positive electrode slurry

A positive electrode slurry was prepared by mixing 94 wt.% cathode material (LNMC TLM 310, obtained from Xinxiang Tianli Energy Co. Ltd., China), 3 wt.% carbon black (SuperP; obtained from Timcal Ltd, Bodio, Switzerland) as a conductive agent, and 0.8 wt.% polyacrylic acid (PAA, #181285, obtained from Sigma-Aldrich, US), 1.5 wt.% styrene butadiene rubber (SBR, AL-2001, obtained from NIPPON A&L INC., Japan) and 0.7 wt.% polyvinylidene fluoride (PVDF; Solef® 5130, obtained from Solvay S.A., Belgium) as a binder, which were dispersed in deionized water to form a slurry with a solid content of 50 wt.%. The slurry was homogenized by a planetary stirring mixer.

### B) Preparation of positive electrode

The homogenized slurry was coated onto both sides of an aluminum foil having a thickness of 20 µm using a transfer coater (ZY-TSF6-6518, obtained from Jin Fan Zhanyu New Energy Technology Co. Ltd., China) with an area density of about 26 mg/cm². The coated films on the aluminum foil were dried for 3 minutes by a 24-meter-long conveyor hot air drying oven as a sub-module of the transfer coater operated at a conveyor speed of about 8 meters/minute to obtain a positive electrode. The temperature-programmed oven allowed a controllable temperature gradient in which the temperature gradually rose from the inlet temperature of 60 °C to the outlet temperature of 75°C.

### C) Preparation of negative electrode

A negative electrode slurry was prepared by mixing 90 wt.% hard carbon (HC; 99.5% purity, Ruifute Technology Ltd., Shenzhen, Guangdong, China), 5 wt.% carbon black and 5 wt.% polyacrylonitrile in deionized water to form a slurry having a solid content of 50 wt.%. The slurry was coated onto both sides of a copper foil having a thickness of 9 µm using a transfer coater with an area density of about 15 mg/cm². The coated films on the copper foil were dried at about 50 °C for 2.4 minute by a 24-meter-long conveyor hot air dryer operated at a conveyor speed of about 10 meters/minute to obtain a negative electrode.

### Example 2

### Assembling of electrode assembly

After drying, the resulting cathode film and anode film of Example 1 were used to prepare the cathode and anode respectively by cutting into individual electrode plates. An electrode assembly was prepared by stacking anodes, cathodes and separators interposed between the positive electrode and the negative electrode in the open air with no control of humidity. The separator was a microporous membrane (obtained from MITSUBISHI PAPER MILLS LTD, Japan) made of PET nonwoven fabric, which had a thickness of 30 µm. The electrode assembly was dried in a vacuum oven inside a glove box under a pressure of 5x10³ Pa at 100 °C for 2 hours. The drying chamber was then filled with hot, dry air having a water content of 5 ppm and a temperature of 90 °C. The hot, dry air was retained in the drying chamber for 15 minutes before evacuating the drying chamber. This cycle was repeated 10 times.

### Moisture contents of electrode assembly, electrodes and separator

The average value of moisture content of the undried electrode assembly was 938 ppm. The average values of moisture contents of the dried electrode assembly, electrodes and separator were 9 ppm, 4 ppm and 5 ppm respectively.

### Assembling of pouch-type battery

A pouch cell was assembled by packaging the dried electrode assembly in a case made of an aluminum-plastic laminated film. The cathode and anode electrode plates were kept apart by separators and the case was pre-formed. An electrolyte was then filled into the case holding the packed electrodes in high-purity argon atmosphere with moisture and oxygen content < 1 ppm. The electrolyte was a solution of LiPF₆ (1 M) in a mixture of ethylene carbonate (EC), ethyl methyl carbonate (EMC) and dimethyl carbonate (DMC) in a volume ratio of 1:1:1. After electrolyte filling, the pouch cells were vacuum sealed and then mechanically pressed using a punch tooling with standard square shape.

### Electrochemical measurements of Example 2

### I) Nominal capacity

The cell was tested galvanostatically at a current density of C/2 at 25 °C on a battery tester (BTS-5V20A, obtained from Neware Electronics Co. Ltd, China) between 3.0 V and 4.2 V. The nominal capacity was about 10 Ah.

### II) Cyclability performance

The cyclability performance of the pouch cell was tested by charging and discharging at a constant current rate of 1C between 3.0 V and 4.2 V. Test result of cyclability performance is shown in Figure 2.

### Example 3

### A) Preparation of positive electrode slurry

A positive electrode slurry was were prepared by mixing 92 wt.% cathode material (LiMn₂O₄ obtained from HuaGuan HengYuan LiTech Co. Ltd., Qingdao, China), 4 wt.% carbon black (SuperP; obtained from Timcal Ltd, Bodio, Switzerland) as a conductive agent, and 4 wt.% polyvinylidene fluoride (PVDF; Solef® 5130, obtained from Solvay S.A., Belgium) as a binder, which were dispersed in N-methyl-2-pyrrolidone (NMP; purity of ≥99%, Sigma-Aldrich, USA) to form a slurry with a solid content of 50 wt.%. The slurry was homogenized by a planetary stirring mixer.

### B) Preparation of positive electrode

The homogenized slurry was coated onto both sides of an aluminum foil having a thickness of 20 µm using a transfer coater with an area density of about 40 mg/cm². The coated films on the aluminum foil were dried for 6 minutes by a 24-meter-long conveyor hot air drying oven as a sub-module of the transfer coater operated at a conveyor speed of about 4 meters/minute to obtain a positive electrode. The temperature-programmed oven allowed a controllable temperature gradient in which the temperature gradually rose from the inlet temperature of 65 °C to the outlet temperature of 80 °C.

### C) Preparation of negative electrode

A negative electrode slurry was prepared by mixing 90 wt.% of hard carbon (HC; purity of 99.5%, obtained from Ruifute Technology Ltd., Shenzhen, Guangdong, China) with 1.5 wt.% carboxymethyl cellulose (CMC, BSH-12, DKS Co. Ltd., Japan) and 3.5 wt.% SBR (AL-2001, NIPPON A&L INC., Japan) as a binder, and 5 wt.% carbon black as a conductive agent, which were dispersed in deionized water to form another slurry with a solid content of 50 wt.%. The slurry was coated onto both sides of a copper foil having a thickness of 9 µm using a transfer coater with an area density of about 15 mg/cm². The coated films on the copper foil were dried at about 50 °C for 2.4 minutes by a 24-meter-long conveyor hot air dryer operated at a conveyor speed of about 10 meters/minute to obtain a negative electrode.

### Example 4

### Assembling of electrode assembly

After drying, the resulting cathode film and anode film of Example 3 were used to prepare the cathode and anode respectively by cutting into individual electrode plates. An electrode assembly was prepared by stacking anodes, cathodes and separators interposed between the positive electrode and the negative electrode in the open air with no control of humidity. The separator was a microporous membrane (Celgard, LLC, US) made of polyethylene having a thickness of 25 µm. The electrode assembly was dried in a vacuum oven inside a glove box under a pressure of 1×10⁴ Pa at 92 °C for 3 hours. The drying chamber was then filled with hot, dry nitrogen having a water content of 5 ppm and a temperature of 85 °C. The hot, dry nitrogen was retained in the drying chamber for 5 minutes before evacuating the drying chamber. This cycle was repeated 5 times.

### Electrochemical measurements of Example 4

### I) Nominal capacity

A pouch cell containing the dried electrode assembly prepared by method described in Example 4 was assembled according to the method described in Example 2. The cell was tested galvanostatically at a current density of C/2 at 25 °C on a battery tester between 3.0 V and 4.2 V. The nominal capacity was about 8.5 Ah.

### II) Cyclability performance

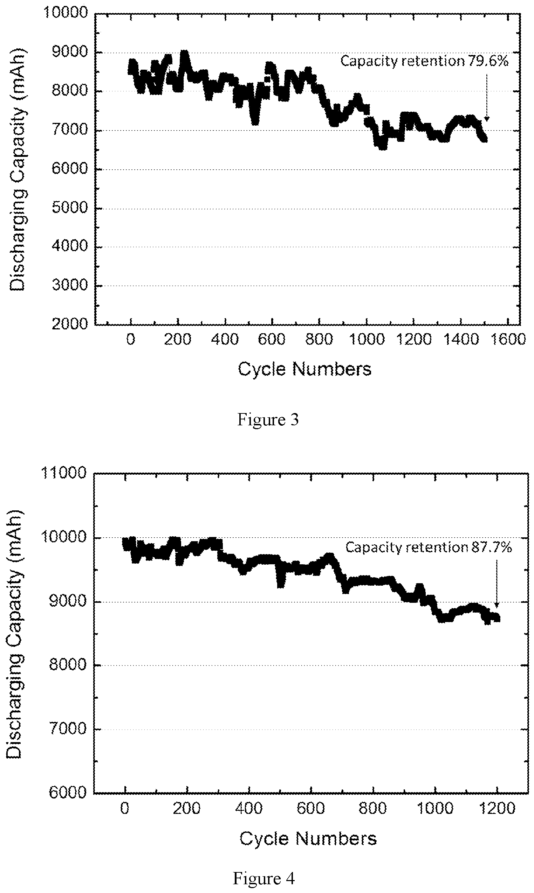

The cyclability performance of the pouch cell was tested by charging and discharging at a constant current rate of 1C between 3.0 V and 4.2 V. Test result of cyclability performance is shown in Figure 3.

### Example 5

### A) Preparation of positive electrode slurry

A positive electrode slurry was prepared by mixing 94 wt.% cathode material LiNi_{0.33}Mn_{0.33}Co_{0.33}O₂ (obtained from Shenzhen Tianjiao Technology Co. Ltd., China), 3 wt.% carbon black (SuperP; obtained from Timcal Ltd, Bodio, Switzerland) as a conductive agent, and 1.5 wt.% polyacrylic acid (PAA, #181285, obtained from Sigma-Aldrich, US) and 1.5 wt.% polyacrylonitrile (LA 132, Chengdu Indigo Power Sources Co., Ltd., China) as a binder, which were dispersed in deionized water to form a slurry with a solid content of 50 wt.%. The slurry was homogenized by a planetary stirring mixer.

### B) Preparation of positive electrode

The homogenized slurry was coated onto both sides of an aluminum foil having a thickness of 20 µm using a transfer coater with an area density of about 32 mg/cm². The coated films on the aluminum foil were dried for 4 minutes by a 24-meter-long conveyor hot air drying oven as a sub-module of the transfer coater operated at a conveyor speed of about 6 meters/minute to obtain a positive electrode. The temperature-programmed oven allowed a controllable temperature gradient in which the temperature gradually rose from the inlet temperature of 60 °C to the outlet temperature of 75 °C.

### C) Preparation of negative electrode

A negative electrode slurry was prepared by mixing 90 wt.% hard carbon, 5 wt.% carbon black and 5 wt.% polyacrylonitrile in deionized water to form a slurry having a solid content of 50 wt.%. The slurry was coated onto both sides of a copper foil having a thickness of 9 µm using a transfer coater with an area density of about 15 mg/cm². The coated films on the copper foil were dried at about 50 °C for 2.4 minutes by a 24-meter-long conveyor hot air dryer operated at a conveyor speed of about 10 meters/minute to obtain a negative electrode.

### Example 6

### Assembling of electrode assembly

After drying, the resulting cathode film and anode film of Example 5 were used to prepare the cathode and anode respectively by cutting into individual electrode plates. An electrode assembly was prepared by stacking anodes, cathodes and separators interposed between the positive electrode and the negative electrode in the open air with no control of humidity. The separator was a microporous membrane (Jiangxi Advanced Nanofiber Technology Co., Ltd., China) made of polyimide having a thickness of 20 µm. The electrode assembly was dried in a vacuum oven inside a glove box under a pressure of 1x10³ Pa at 110 °C for 2 hours. The drying chamber was then filled with hot, dry air having a water content of 5 ppm and a temperature of 100 °C. The hot, dry air was retained in the drying chamber for 10 minutes before evacuating the drying chamber. This cycle was repeated 10 times.

### Electrochemical measurements of Example 6

### I) Nominal capacity

A pouch cell containing the dried electrode assembly prepared by method described in Example 6 was assembled according to the method described in Example 2. The cell was tested galvanostatically at a current density of C/2 at 25 °C on a battery tester between 3.0 V and 4.2 V. The nominal capacity was about 10 Ah.

### II) Cyclability performance

The cyclability performance of the pouch cell was tested by charging and discharging at a constant current rate of 1C between 3.0 V and 4.2 V. Test result of cyclability performance is shown in Figure 4.

### Example 7

### A) Preparation of positive electrode slurry

A positive electrode slurry was prepared by mixing 91 wt.% cathode material LiFePO₄ (obtained from Xiamen Tungsten Co. Ltd., China), 5 wt.% carbon black (SuperP; obtained from Timcal Ltd, Bodio, Switzerland) as a conductive agent, and 4 wt.% polyacrylonitrile (LA 132, Chengdu Indigo Power Sources Co., Ltd., China) as a binder, which were dispersed in deionized water to form a slurry with a solid content of 50 wt.%. The slurry was homogenized by a planetary stirring mixer.

### B) Preparation of positive electrode

The homogenized slurry was coated onto both sides of an aluminum foil having a thickness of 30 µm using a transfer coater with an area density of about 56 mg/cm². The coated films on the aluminum foil were then dried for 6 minutes by a 24-meter-long conveyor hot air drying oven as a sub-module of the transfer coater operated at a conveyor speed of about 4 meters/minute to obtain a positive electrode. The temperature-programmed oven allowed a controllable temperature gradient in which the temperature gradually rose from the inlet temperature of 75 °C to the outlet temperature of 90 °C.

### C) Preparation of negative electrode

A negative electrodes were prepared by mixing 90 wt.% of hard carbon (HC; purity of 99.5%, obtained from Ruifute Technology Ltd., China) with 1.5 wt.% CMC (BSH-12, DKS Co. Ltd., Japan) and 3.5 wt.% SBR (AL-2001, NIPPON A&L INC., Japan) as a binder, and 5 wt.% carbon black as a conductive agent, which were dispersed in deionized water to form another slurry with a solid content of 50 wt.%. The slurry was coated onto both sides of a copper foil having a thickness of 9 µm using a transfer coater with an area density of about 15 mg/cm². The coated films on the copper foil were then dried at about 50 °C for 2.4 minutes by a 24-meter-long conveyor hot air dryer operated at a conveyor speed of about 10 meters/minute to obtain a negative electrode.

### Example 8

### Assembling of electrode assembly

After drying, the resulting cathode film and anode film of Example 7 were used to prepare the cathode and anode respectively by cutting into individual electrode plates. An electrode assembly was prepared by stacking anodes, cathodes and separators interposed between the positive electrode and the negative electrode in the open air with no control of humidity. The separator was a ceramic coated microporous membrane (SEPARION, Evonik Industries, Germany) made of PET nonwoven fabric, which had a thickness of about 35 µm. The electrode assembly was dried in a vacuum oven inside a glove box under a pressure of 1x10³ Pa at 120 °C for 4 hours. The drying chamber was then filled with hot, dry air having a water content of 5 ppm and a temperature of 110 °C. The hot, dry air was retained in the drying chamber for 5 minutes before evacuating the drying chamber. This cycle was repeated 7 times.

### Electrochemical measurements of Example 8

### I) Nominal capacity

A pouch cell containing the dried electrode assembly prepared by method described in Example 8 was assembled according to the method described in Example 2. The cell was tested galvanostatically at a current density of C/2 at 25 °C on a battery tester between 2.5 V and 3.6 V. The nominal capacity was about 4.6 Ah.

### II) Cyclability performance

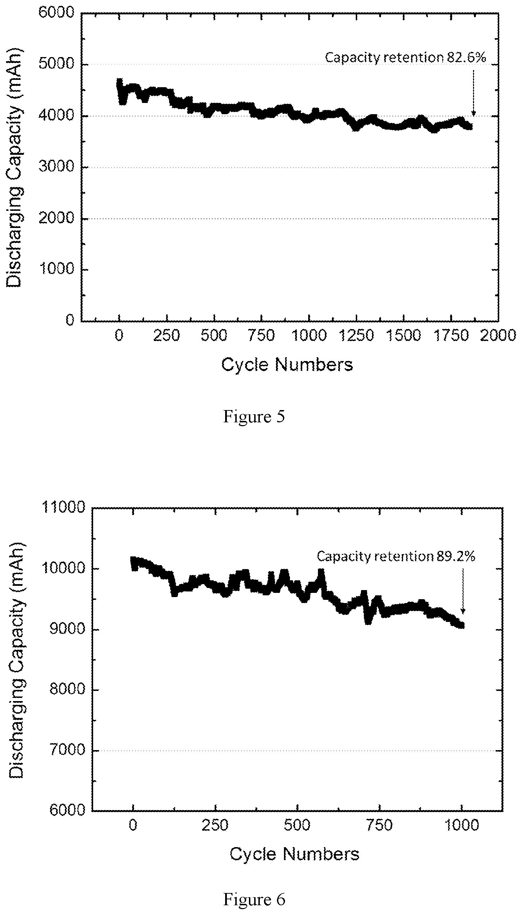

The cyclability performance of the pouch cell was tested by charging and discharging at a constant current rate of 1C between 2.5 V and 3.6 V. Test result of cyclability performance is shown in Figure 5.

### Example 9

### A) Preparation of positive electrode slurry

A positive electrode slurry was prepared by mixing 92 wt.% cathode material LiCoO₂ (obtained from Xiamen Tungsten Co. Ltd., China), 3 wt.% carbon black (SuperP; obtained from Timcal Ltd, Bodio, Switzerland) as a conductive agent, and 1 wt.% CMC (BSH-12, DKS Co. Ltd., Japan), 2 wt.% SBR (AL-2001, NIPPON A&L INC., Japan) and 2 wt.% polyvinylidene fluoride (PVDF; Solef® 5130, obtained from Solvay S.A., Belgium) as a binder, which were dispersed in deionized water to form a slurry with a solid content of 50 wt.%. The slurry was homogenized by a planetary stirring mixer.

### B) Preparation of positive electrode

The homogenized slurry was coated onto both sides of an aluminum foil having a thickness of 20 µm using a transfer coater with an area density of about 32 mg/cm². The coated films on the aluminum foil were dried for 4 minutes by a 24-meter-long conveyor hot air drying oven as a sub-module of the transfer coater operated at a conveyor speed of about 6 meters/minute to obtain a positive electrode. The temperature-programmed oven allowed a controllable temperature gradient in which the temperature gradually rose from the inlet temperature of 60 °C to the outlet temperature of 75 °C.

### C) Preparation of negative electrode

A negative electrode slurry was prepared by mixing 90 wt.% hard carbon, 5 wt.% carbon black and 5 wt.% polyacrylonitrile in deionized water to form a slurry having a solid content of 50 wt.%. The slurry was coated onto both sides of a copper foil having a thickness of 9 µm using a transfer coater with an area density of about 15 mg/cm². The coated films on the copper foil were dried at about 50 °C for 2.4 minutes by a 24-meter-long conveyor hot air dryer operated at a conveyor speed of about 10 meters/minute to obtain a negative electrode.

### Example 10

### Assembling of electrode assembly

After drying, the resulting cathode film and anode film of Example 9 were used to prepare the cathode and anode respectively by cutting into individual electrode plates. An electrode assembly was prepared by stacking anodes, cathodes and separators interposed between the positive electrode and the negative electrode in the open air with no control of humidity. The electrode assembly was dried in a vacuum oven inside a glove box under a pressure of 5x10⁴ Pa at 95 °C for 1.5 hours. The separator was a microporous membrane

(Symmetrix, NEPTCO Corporation, US) made of PVDF and PET having a thickness of 30 µm. The drying chamber was then filled with hot, dry air having a water content of 5 ppm and a temperature of 90 °C. The hot, dry air was retained in the drying chamber for 30 minutes before evacuating the drying chamber. This cycle was repeated 10 times.

### Electrochemical measurements of Example 10

### I) Nominal capacity

A pouch cell containing the dried electrode assembly prepared by method described in Example 10 was assembled according to the method described in Example 2. The cell was tested galvanostatically at a current density of C/2 at 25 °C on a battery tester between 3.0 V and 4.2 V. The nominal capacity was about 10 Ah.

### II) Cyclability performance

The cyclability performance of the pouch cell was tested by charging and discharging at a constant current rate of 1C between 3.0 V and 4.2 V. Test result of cyclability performance is shown in Figure 6.

### Example 11

### Assembling of electrode assembly

Positive and negative electrodes were prepared by the method described in Example 9. An electrode assembly was prepared by stacking anodes, cathodes and separators interposed between the positive electrode and the negative electrode in the open air with no control of humidity. The separator was a microporous membrane made of PVDF and PET (Symmetrix, NEPTCO Corporation, US) having a thickness of 30 µm. The electrode assembly was dried in a vacuum oven inside a glove box under a pressure of 3x10³ Pa at 105 °C for 1.5 hours. The drying chamber was then filled with hot, dry air having a water content of 5 ppm and a temperature of 100 °C. The hot, dry air was retained in the drying chamber for 10 minutes before evacuating the drying chamber. This cycle was repeated 10 times.

### Electrochemical measurements of Example 11

### I) Nominal capacity

A pouch cell containing the dried electrode assembly prepared by method described in Example 11 was assembled according to the method described in Example 2. The cell was tested galvanostatically at a current density of C/2 at 25 °C on a battery tester between 3.0 V and 4.2 V. The nominal capacity was about 10 Ah.

### II) Cyclability performance

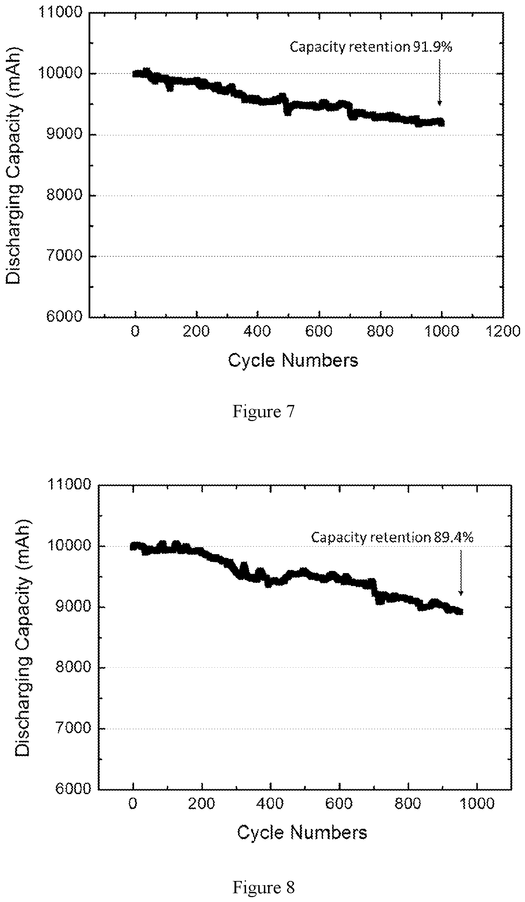

The cyclability performance of the pouch cell was tested by charging and discharging at a constant current rate of 1C between 3.0 V and 4.2 V. Test result of cyclability performance is shown in Figure 7.

### Example 12

### Assembling of electrode assembly

Positive and negative electrodes were prepared by the method described in Example 5. An electrode assembly was prepared by stacking anodes, cathodes and separators interposed between the positive electrode and the negative electrode in the open air with no control of humidity. The electrode assembly was dried in a vacuum oven inside a glove box under a pressure of 2x10³ Pa at 125 °C for 1 hour. The separator was a microporous membrane (Jiangxi Advanced Nanofiber Technology Co., Ltd., China) made of polyimide having a thickness of 20 µm. The drying chamber was then filled with hot, dry air having a water content of 5 ppm and a temperature of 120 °C. The hot, dry air was retained in the drying chamber for 15 minutes before evacuating the drying chamber. This cycle was repeated 10 times.

### Electrochemical measurements of Example 12

### I) Nominal capacity

A pouch cell containing the dried electrode assembly prepared by method described in Example 12 was assembled according to the method described in Example 2. The cell was tested galvanostatically at a current density of C/2 at 25 °C on a battery tester between 3.0 V and 4.2 V. The nominal capacity was about 10 Ah.

### II) Cyclability performance

The cyclability performance of the pouch cell was tested by charging and discharging at a constant current rate of 1C between 3.0 V and 4.2 V. Test result of cyclability performance is shown in Figure 8.

### Example 13

### Assembling of electrode assembly

Positive and negative electrodes were prepared by the method described in Example 7. An electrode assembly was prepared by stacking anodes, cathodes and separators interposed between the positive electrode and the negative electrode in the open air with no control of humidity. The separator was a ceramic coated microporous membrane (SEPARION, Evonik Industries, Germany) made of PET nonwoven fabric, which had a thickness of about 35 µm. The electrode assembly was dried in a vacuum oven inside a glove box under a pressure of 1×10⁴ Pa at 135 °C for 2 hours. The drying chamber was then filled with hot, dry air having a water content of 5 ppm and a temperature of 120 °C. The hot, dry air was retained in the drying chamber for 5 minutes before evacuating the drying chamber. This cycle was repeated 5 times.

### Electrochemical measurements of Example 13

### I) Nominal capacity

A pouch cell containing the dried electrode assembly prepared by method described in Example 13 was assembled according to the method described in Example 2. The cell was tested galvanostatically at a current density of C/2 at 25 °C on a battery tester between 2.5 V and 3.6 V. The nominal capacity was about 4.6 Ah.

### II) Cyclability performance

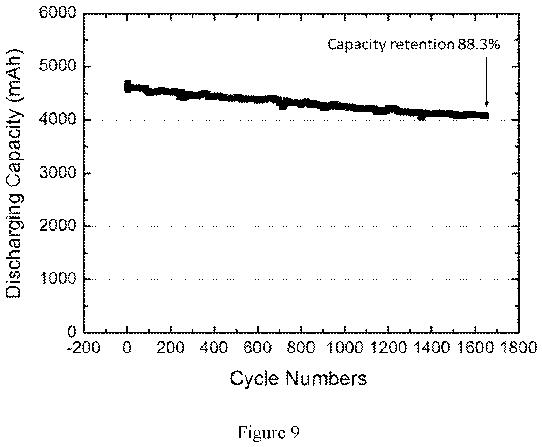

The cyclability performance of the pouch cell was tested by charging and discharging at a constant current rate of 1C between 2.5 V and 3.6 V. Test result of cyclability performance is shown in Figure 9.

### Example 14

### Assembling of electrode assembly

Positive and negative electrodes were prepared by the method described in Example 5. An electrode assembly was prepared by stacking anodes, cathodes and separators interposed between the positive electrode and the negative electrode and spirally wound into a jelly-roll configuration in the open air with no control of humidity. The separator was a microporous membrane (obtained from MITSUBISHI PAPER MILLS LTD, Japan) made of PET nonwoven fabric, having a thickness of 30 µm. The electrode assembly was dried in a vacuum oven inside a glove box under a pressure of 660 Pa at 110 °C for 2 hours. The drying chamber was then filled with hot, dry air having a water content of 5 ppm and a temperature of 90 °C. The hot, dry air was retained in the drying chamber for 10 minutes before evacuating the drying chamber. This cycle was repeated 10 times.

### Electrochemical measurements of Example 14

### I) Nominal capacity

A pouch cell containing the dried electrode assembly prepared by method described in Example 14 was assembled according to the method described in Example 2. The cell was tested galvanostatically at a current density of C/2 at 25 °C on a battery tester between 3.0 V and 4.2 V. The nominal capacity was about 10 Ah.

### II) Cyclability performance

The cyclability performance of the pouch cell was tested by charging and discharging at a constant current rate of 1C between 3.0 V and 4.2 V.

### Comparative Example 1

### Assembling of electrode assembly

Positive and negative electrodes were prepared by the method described in Example 5. An electrode assembly was assembled and dried by the method described in Example 6 except that the electrode assembly was dried in a vacuum oven at 160 °C instead of 110 °C.

### Electrochemical measurements of Comparative Example 1

### I) Nominal capacity

A pouch cell containing the dried electrode assembly prepared by method described in Comparative Example 1 was assembled according to the method described in Example 2. The cell was tested galvanostatically at a current density of C/2 at 25 °C on a battery tester between 3.0 V and 4.2 V. The nominal capacity was about 10 Ah.

### II) Cyclabilityperformance

The cyclability performance of the pouch cell was tested by charging and discharging at a constant current rate of 1C between 3.0 V and 4.2 V.

### Comparative Example 2

### Assembling of electrode assembly

Positive and negative electrodes were prepared by the method described in Example 5. An electrode assembly was assembled and dried by the method described in Example 6 except that the electrode assembly was dried in a vacuum oven at 75 °C instead of 110 °C.

### Electrochemical measurements of Comparative Example 2

### I) Nominal capacity

A pouch cell containing the dried electrode assembly prepared by method described in Comparative Example 2 was assembled according to the method described in Example 2. The cell was tested galvanostatically at a current density of C/2 at 25 °C on a battery tester between 3.0 V and 4.2 V. The nominal capacity was about 10 Ah.

### II) Cyclability performance

The cyclability performance of the pouch cell was tested by charging and discharging at a constant current rate of 1C between 3.0 V and 4.2 V.

### Comparative Example 3

### Assembling of electrode assembly

Positive and negative electrodes were prepared by the method described in Example 5. An electrode assembly was assembled and dried by the method described in Example 12 except that the electrode assembly was dried in a vacuum oven for 24 hours continuously without repeating filling and evacuating the chamber.

### Electrochemical measurements of Comparative Example 3

### I) Nominal capacity

A pouch cell containing the dried electrode assembly prepared by method described in Comparative Example 3 was assembled according to the method described in Example 2. The cell was tested galvanostatically at a current density of C/2 at 25 °C on a battery tester between 3.0 V and 4.2 V. The nominal capacity was about 10 Ah.

### II) Cyclability performance

The cyclability performance of the pouch cell was tested by charging and discharging at a constant current rate of 1C between 3.0 V and 4.2 V.

### Comparative Example 4

### Assembling of electrode assembly

Positive and negative electrodes were prepared by the method described in Example 1. An electrode assembly was assembled and dried by the method described in Example 2 except that the number of cycle of vacuum drying and gas filling is 3 instead of 10.

### Electrochemical measurements of Comparative Example 4

### I) Nominal capacity

A pouch cell containing the dried electrode assembly prepared by method described in Comparative Example 4 was assembled according to the method described in Example 2. The cell was tested galvanostatically at a current density of C/2 at 25 °C on a battery tester between 3.0 V and 4.2 V. The nominal capacity was about 10 Ah.

### II) Cyclability performance

The cyclability performance of the pouch cell was tested by charging and discharging at a constant current rate of 1C between 3.0 V and 4.2 V.

### Comparative Example 5

### Assembling of electrode assembly

Positive and negative electrodes were prepared by the method described in Example 5. An electrode assembly was prepared by stacking anodes, cathodes and separators interposed between the positive electrode and the negative electrode and spirally wound into a jelly-roll configuration in the open air with no control of humidity. The separator was a microporous membrane (obtained from MITSUBISHI PAPER MILLS LTD, Japan) made of PET nonwoven fabric, which had a thickness of 30 µm. The electrode assembly was dried in a vacuum oven inside a glove box under a pressure of 650 Pa at 80 °C for 1 hours. The drying chamber was then filled with hot, dry air having a water content of 5 ppm and a temperature of 90 °C. The hot, dry air was retained in the drying chamber for 5 minutes before evacuating the drying chamber. This cycle was repeated 5 times.

### Electrochemical measurements of Comparative Example 5

### I) Nominal capacity

A pouch cell containing the dried electrode assembly prepared by method described in Comparative Example 5 was assembled according to the method described in Example 2. The cell was tested galvanostatically at a current density of C/2 at 25 °C on a battery tester between 3.0 V and 4.2 V. The nominal capacity was about 10 Ah.

### II) Cyclability performance

The cyclability performance of the pouch cell was tested by charging and discharging at a constant current rate of 1C between 3.0 V and 4.2 V.

The formulations of the pouch cell of each of these Examples and Comparative Examples are summarized in Table 1 below. The drying conditions of the electrode assembly of each of these Examples and Comparative Examples are shown in Table 2 below. The moisture contents of the electrode assembly, electrodes and separators, and capacity retentions of the cell of each of these Examples and Comparative Examples are shown in Table 3. The electrochemical tests of these Examples show the good electrochemical stability of the battery in a wide range of potential, as well as outstanding cycle performance.

**Table 1**

| | Cathode material | Cathode binder material | Solvent | | Separator |
|---|---|---|---|---|---|
| | | | Cathode | Anode | |
| Example 1 | NMC333 | PAA+SBR+PVDF | H₂O | H₂O | PET |
| Example 3 | LMO | PVDF | NMP | H₂O | PE |
| Example 5 | NMC333 | PAA+LA132 | H₂O | H₂O | PI |
| Example 7 | LFP | LA132 | H₂O | H₂O | Ceramic coated PET |
| Example 9 | LCO | CMC+SBR+PVDF | H₂O | H₂O | PVDF and PET |
| Example 11 | LCO | CMC+SBR+PVDF | H₂O | H₂O | PVDF and PET |
| Example 12 | NMC333 | PAA+LA132 | H₂O | H₂O | PI |
| Example 13 | LFP | LA132 | H₂O | H₂O | Ceramic coated PET |
| Example 14¹ | NMC333 | PAA+LA132 | H₂O | H₂O | PET |
| Comparative Example 1 | NMC333 | PAA+LA132 | H₂O | H₂O | PI |
| Comparative Example 2 | NMC333 | PAA+LA132 | H₂O | H₂O | PI |
| Comparative Example 3 | NMC333 | PAA+LA132 | H₂O | H₂O | PI |
| Comparative Example 4 | NMC333 | PAA+SBR+PVDF | H₂O | H₂O | PET |
| Comparative Example 5¹ | NMC333 | PAA+LA132 | H₂O | H₂O | PET |

| | | | | | |
|---|---|---|---|---|---|
| Note: ¹The electrode assembly of the pouch cell was spirally-rolled into a jelly-roll configuration before drying. | | | | | |

**Table 2**

| Electrode assembly drying | | | | | | | |
|---|---|---|---|---|---|---|---|
| | Vacuum drying | | | Gas filling | | No. of cycle | Total time (hrs) |
| | Pressure (Pa) | Temp (°C) | Time (hrs) | Gas temp (°C) | Time (mins) | | |
| Example 2 | 5,000 | 100 | 2 | 90 | 15 | 10 | 22.5 |
| Example 4 | 10,000 | 92 | 3 | 85 | 5 | 5 | 15.4 |
| Example 6 | 1,000 | 110 | 2 | 100 | 10 | 10 | 21.7 |
| Example 8 | 1,000 | 120 | 4 | 110 | 5 | 7 | 28.6 |
| Example 10 | 50,000 | 95 | 1.5 | 90 | 30 | 10 | 20 |
| Example 11 | 3,000 | 105 | 1.5 | 100 | 10 | 10 | 16.7 |
| Example 12 | 2,000 | 125 | 1 | 120 | 15 | 10 | 12.5 |
| Example 13 | 10,000 | 135 | 2 | 120 | 5 | 5 | 10.4 |
| Example 14 | 660 | 110 | 2 | 90 | 10 | 10 | 21.7 |
| Comparative Example 1 | 1,000 | 160 | 2 | 100 | 10 | 10 | 21.7 |
| Comparative Example 2 | 1,000 | 75 | 2 | 100 | 10 | 10 | 21.7 |
| Comparative Example 3 | 2,000 | 125 | 24 | / | / | / | 24 |
| Comparative Example 4 | 5,000 | 100 | 2 | 90 | 15 | 3 | 6.75 |
| Comparative Example 5 | 650 | 80 | 1 | 90 | 5 | 5 | 5.42 |

**Table 3**

| | Water content (ppm) | | | | Cyclability performance | |
|---|---|---|---|---|---|---|
| | Electrodes | Separator | Electrode assembly | | No. of cycle | Capacity retention (%) |
| | | | Before drying | After drying | | |
| Example 2 | 4 | 5 | 938 | 9 | 500 | 93.1 |
| Example 4 | 93 | 110 | 773 | 113 | 1,500 | 79.6 |
| Example 6 | 5 | 11 | 1,344 | 5 | 1,200 | 87.7 |
| Example 8 | 6 | 11 | 647 | 4 | 1,850 | 82.6 |
| Example 10 | 5 | 21 | 871 | 7 | 1,000 | 89.2 |
| Example 11 | 7 | 13 | 950 | 6 | 1,000 | 91.9 |
| Example 12 | 5 | 14 | 1,192 | 5 | 950 | 89.4 |
| Example 13 | 4 | 10 | 545 | 3 | 1,650 | 88.3 |
| Example 14 | 10 | 23 | 897 | 18 | 1,380 | 88.6 |
| Comparative Example 1 | 6 | 9 | 1,039 | 18 | 960 | 67.9 |
| Comparative Example 2 | 33 | 52 | 934 | 101 | 1,067 | 75.2 |
| Comparative Example 3 | 78 | 132 | 792 | 164 | 1,210 | 70.2 |
| Comparative Example 4 | 11 | 19 | 864 | 50 | 1,719 | 63.5 |
| Comparative Example 5 | 92 | 154 | 990 | 203 | 1,160 | 74.2 |

## Claims

1. A method of drying an electrode assembly, comprising steps of:
1) stacking at least one anode, at least one cathode, and at least one separator interposed between the at least one anode and at least one cathode to prepare an electrode assembly;
2) placing the electrode assembly in a drying chamber;
3) drying the electrode assembly under vacuum at a temperature higher than 100 °C to 155 °C;
4) filling the drying chamber with dry air or inert gas; and
5) repeating steps 3) and 4) to obtain a dried electrode assembly,
wherein the dry air or inert gas stays in the drying chamber for a time period of at least 5 minutes and less than 30 minutes; and wherein water content of the dried electrode assembly is less than 20 ppm by weight, based on total weight of the dried electrode assembly, and wherein the dry air or inert gas restores the drying chamber to atmospheric pressure .

2. The method of claim 1, wherein the electrode assembly is dried under vacuum for a time period from 5 minutes to 4 hours.

3. The method of claim 1, wherein the electrode assembly is dried under vacuum for a time period from 30 minutes to 2 hours.

4. The method of claim 1, wherein the pressure in the drying chamber in step 3) is reduced to less than 25kPa, less than 15 kPa, less than 10 kPa, or less than 5 kPa.

5. The method of claim 1, wherein the temperature of the dry air or inert gas is from 70 °C to 155 °C, or from 80 °C to 120 °C.

6. The method of claim 1, wherein steps 3) and 4) are repeated between 2 and 50 times, between 2 and 30 times, or between 2 and 20 times.

7. The method of claim 1, wherein the at least one anode and at least one cathode in the dried electrode assembly have a water content of less than 20 ppm by weight, based on the total weight of the at least one dried anode and at least one dried cathode.

8. The method of claim 1, wherein the at least one anode and at least one cathode in the dried electrode assembly have a water content of less than 10 ppm by weight, based on the total weight of the at least one dried anode and at least one dried cathode.

9. The method of claim 1, wherein the at least one separator in the dried electrode assembly has a water content of less than 20 ppm by weight, based on the total weight of the at least one dried separator.

10. The method of claim 1, wherein the at least one separator in the dried electrode assembly has a water content of less than 10 ppm by weight, based on the total weight of the at least one dried separator.

11. The method of claim 1, wherein the at least one separator is made of polymeric fibers selected from the group consisting of polyolefin, polyethylene, high-density polyethylene, linear low-density polyethylene, low-density polyethylene, ultrahigh-molecular-weight polyethylene, polypropylene, polypropylene/polyethylene co-polymer, polybutylene, polypentene, polyacetal, polyamide, polycarbonate, polyimide, polyetherether ketone, polysulfones, polyphenylene oxide, polyphenylene sulfide, polyacrylonitrile, polyvinylidene fluoride, polyoxymethylene, polyvinyl pyrrolidone, polyester, polyethylene terephthalate, polybutylene terephthalate, polyethylene naphthalene, polybutylene naphthalate, and combinations thereof.

12. The method of claim 1, wherein each of the at least one anode and at least one cathode independently comprises a binder material selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acryl rubber, butyl rubber, fluorine rubber, polytetrafluoroethylene, polyethylene, polypropylene, ethylene/propylene copolymers, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resins, phenolic resins, epoxy resins, carboxymethyl cellulose, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, polymethacrylic acid, polymethacrylate, polyacrylamide, polyurethane, fluorinated polymer, chlorinated polymer, a salt of alginic acid, polyvinylidene fluoride, poly(vinylidene fluoride)-hexafluoropropene, and combinations thereof.

## Patentansprüche

1. Verfahren zum Trocknen einer Elektrodenanordnung, das folgende Schritte umfasst:
1) Stapeln wenigstens einer Anode, wenigstens einer Kathode und wenigstens eines Separators, der zwischen der wenigstens einen Anode und wenigstens einen Kathode angeordnet ist, um eine Elektrodenanordnung herzustellen;
2) Anordnen der Elektrodenanordnung in einer Trocknungskammer;
3) Trocknen der Elektrodenanordnung unter Vakuum bei einer Temperatur von über 100 °C bis 155 °C;
4) Füllen der Trocknungskammer mit trockener Luft oder Inertgas; und
5) Wiederholen der Schritte 3) und 4), um eine getrocknete Elektrodenanordnung zu erhalten,
wobei die trockene Luft oder das Inertgas über einen Zeitraum von wenigstens 5 Minuten und weniger als 30 Minuten in der Trocknungskammer verbleibt; und wobei der Wassergehalt der getrockneten Elektrodenanordnung weniger als 20 Gew.-ppm, basierend auf dem Gesamtgewicht der getrockneten Elektrodenanordnung, beträgt und wobei die trockene Luft oder das Inertgas die Trocknungskammer wieder auf Atmosphärendruck bringt.

2. Verfahren nach Anspruch 1, wobei die Elektrodenanordnung über einen Zeitraum von 5 Minuten bis 4 Stunden unter Vakuum getrocknet wird.

3. Verfahren nach Anspruch 1, wobei die Elektrodenanordnung über einen Zeitraum von 30 Minuten bis 2 Stunden unter Vakuum getrocknet wird.

4. Verfahren nach Anspruch 1, wobei der Druck in der Trocknungskammer in Schritt 3) auf weniger als 25 kPa, weniger als 15 kPa, weniger als 10 kPa oder weniger als 5 kPa verringert wird.

5. Verfahren nach Anspruch 1, wobei die Temperatur der trockenen Luft oder des Inertgases 70 °C bis 155 °C oder 80 °C bis 120 °C beträgt.

6. Verfahren nach Anspruch 1, wobei die Schritte 3) und 4) zwischen 2 und 50 Mal, zwischen 2 und 30 Mal oder zwischen 2 und 20 Mal wiederholt werden.

7. Verfahren nach Anspruch 1, wobei die wenigstens eine Anode und wenigstens eine Kathode in der getrockneten Elektrodenanordnung einen Wassergehalt von weniger als 20 Gew.-ppm, basierend auf dem Gesamtgewicht der wenigstens einen getrockneten Anode und wenigstens einen getrockneten Kathode, aufweisen.

8. Verfahren nach Anspruch 1, wobei die wenigstens eine Anode und wenigstens eine Kathode in der getrockneten Elektrodenanordnung einen Wassergehalt von weniger als 10 Gew.-ppm, basierend auf dem Gesamtgewicht der wenigstens einen getrockneten Anode und wenigstens einen getrockneten Kathode, aufweisen.

9. Verfahren nach Anspruch 1, wobei der wenigstens eine Separator in der getrockneten Elektrodenanordnung einen Wassergehalt von weniger als 20 Gew.-ppm, basierend auf dem Gesamtgewicht des wenigstens einen getrockneten Separators, aufweist.

10. Verfahren nach Anspruch 1, wobei der wenigstens eine Separator in der getrockneten Elektrodenanordnung einen Wassergehalt von weniger als 10 Gew.-ppm, basierend auf dem Gesamtgewicht des wenigstens einen getrockneten Separators, aufweist.

11. Verfahren nach Anspruch 1, wobei der wenigstens eine Separator aus Polymerfasern hergestellt ist, die ausgewählt sind aus der Gruppe bestehend aus Polyolefin, Polyethylen, Polyethylen hoher Dichte, linearem Polyethylen niederer Dichte, Polyethylen niederer Dichte, ultrahochmolekularem Polyethylen, Polypropylen, Polypropylen/Polyethylen-Copolymer, Polybutylen, Polypenten, Polyacetal, Polyamid, Polycarbonat, Polyimid, Polyetheretherketon, Polysulfonen, Polyphenylenoxid, Polyphenylensulfid, Polyacrylnitril, Polyvinylidenfluorid, Polyoxymethylen, Polyvinylpyrrolidon, Polyester, Polyethylenterephthalat, Polybutylenterephthalat, Polyethylennaphthalen, Polybutylennaphthalat und Kombinationen daraus.

12. Verfahren nach Anspruch 1, wobei jede der wenigstens einen Anode und wenigstens einen Kathode unabhängig ein Bindemittel umfasst, ausgewählt aus der Gruppe bestehend aus Styrol-Butadien-Kautschuk, acryliertem Styrol-Butadien-Kautschuk, Acrylnitril-Copolymer, Acrylnitril-Butadien-Kautschuk, Nitril-Butadien-Kautschuk, Acrylnitril-Styrol-Butadien-Copolymer, Acrylkautschuk, Butylkautschuk, Fluorkautschuk, Polytetrafluorethylen, Polyethylen, Polypropylen, Ethylen/Propylen-Copolymeren, Polybutadien, Polyethylenoxid, chlorsulfoniertem Polyethylen, Polyvinylpyrrolidon, Polyvinylpyridin, Polyvinylalkohol, Polyvinylacetat, Polyepichlorhydrin, Polyphosphazen, Polyacrylnitril, Polystyrol, Latex, Acrylharzen, Phenolharzen, Epoxidharzen, Carboxymethylcellulose, Hydroxypropylcellulose, Celluloseacetat, Celluloseacetatbutyrat, Celluloseacetatpropionat, Cyanoethylcellulose, Cyanoethylsucrose, Polyester, Polyamid, Polyether, Polyimid, Polycarboxylat, Polycarbonsäure, Polyacrylsäure, Polyacrylat, Polymethacrylsäure, Polymethacrylat, Polyacrylamid, Polyurethan, fluoriertem Polymer, chloriertem Polymer, einem Salz der Alginsäure, Polyvinylidenfluorid, Poly(vinylidenfluorid)hexafluorpropen und Kombinationen daraus.

## Revendications

1. Un procédé de séchage d'un ensemble formant électrode, comprenant les étapes consistant à :
1) empiler au moins une anode, au moins une cathode et au moins un séparateur interposé entre ladite au moins une anode et au moins une cathode pour préparer un ensemble formant électrode ;
2) placer l'ensemble formant électrode dans une chambre de séchage ;
3) sécher l'ensemble formant électrode sous vide à une température supérieure à 100° C à 155° C ;
4) remplir la chambre de séchage avec de l'air sec ou un gaz inerte ; et
5) répéter les étapes 3) et 4) pour obtenir un ensemble formant électrode séché,
l'air sec ou le gaz inerte restant dans la chambre de séchage pendant une durée d'au moins 5 minutes et inférieure à 30 minutes ; et la teneur en eau de l'ensemble formant électrode séché étant inférieure à 20 ppm en poids, par rapport au poids total de l'ensemble formant électrode séché, et l'air sec ou le gaz inerte ramenant la chambre de séchage à la pression atmosphérique.

2. Le procédé selon la revendication 1, dans lequel l'ensemble formant électrode est séché sous vide pendant une durée allant de 5 minutes à 4 heures.

3. Le procédé selon la revendication 1, dans lequel l'ensemble formant électrode est séché sous vide pendant une durée allant de 30 minutes à 2 heures.

4. Le procédé selon la revendication 1, dans lequel la pression dans la chambre de séchage à l'étape 3) est réduite à moins de 25 kPa, moins de 15 kPa, moins de 10 kPa ou moins de 5 kPa.

5. Le procédé selon la revendication 1, dans lequel la température de l'air sec ou du gaz inerte va de 70° C à 155° C, ou de 80° C à 120° C.

6. Le procédé selon la revendication 1, dans lequel les étapes 3) et 4) sont répétées entre 2 et 50 fois, entre 2 et 30 fois, ou entre 2 et 20 fois.

7. Le procédé selon la revendication 1, dans lequel ladite au moins une anode et au moins une cathode dans l'ensemble formant électrode séché ont une teneur en eau inférieure à 20 ppm en poids, par rapport au poids total de ladite au moins une anode séchée et au moins une cathode séchée.

8. Le procédé selon la revendication 1, dans lequel ladite au moins une anode et au moins une cathode dans l'ensemble formant électrode séchée ont une teneur en eau inférieure à 10 ppm en poids, par rapport au poids total de ladite au moins une anode séchée et au moins une cathode séchée.

9. Le procédé selon la revendication 1, dans lequel ledit au moins un séparateur dans l'ensemble formant électrode séché a une teneur en eau inférieure à 20 ppm en poids, par rapport au poids total dudit au moins un séparateur séché.

10. Le procédé selon la revendication 1, dans lequel ledit au moins un séparateur dans l'ensemble formant électrode séché a une teneur en eau inférieure à 10 ppm en poids, par rapport au poids total dudit au moins un séparateur séché.

11. Le procédé selon la revendication 1, dans lequel ledit au moins un séparateur est constitué de fibres polymères choisies dans le groupe constitué de polyoléfine, polyéthylène, polyéthylène à haute densité, polyéthylène à basse densité linéaire, polyéthylène à basse densité, polyéthylène à poids moléculaire ultra élevé, polypropylène, copolymère de polypropylène / polyéthylène, polybutylène, polypentène, polyacétal, polyamide, polycarbonate, polyimide, polyétheréther cétone, polysulfones, oxyde de polyphénylène, sulfure de polyphénylène, polyacrylonitrile, fluorure de polyvinylidène, polyoxyméthylène, polyvinylpyrrolidone, polyester, polyéthylène téréphtalate, polybutylène téréphtalate, polyéthylène naphtalène, polybutylène naphtalate et les combinaisons de ceux-ci.

12. Le procédé selon la revendication 1, dans lequel chacune parmi ladite au moins une anode et au moins une cathode comprend indépendamment un matériau liant choisi dans le groupe constitué par le caoutchouc styrène-butadiène, le caoutchouc styrène-butadiène acrylé, le copolymère d'acrylonitrile, le caoutchouc acrylonitrile-butadiène., le caoutchouc nitrile butadiène, le copolymère acrylonitrile-styrène-butadiène, le caoutchouc acrylique, le caoutchouc butyle, le caoutchouc fluoré, le polytétrafluoroéthylène, le polyéthylène, le polypropylène, les copolymères éthylène/propylène, le polybutadiène, le oxyde de polyéthylène, le polyéthylène chlorosulfoné, le polyvinylpyrrolidone, le polyvinylpyridine, l'alcool polyvinylique, le polyvinylacétate, la polyépichlorhydrine, le polyphosphazène, le polyacrylonitrile, le polystyrène, le latex, les résines acryliques, les résines phénoliques, les résines époxy, le carboxyméthylcellulose, l'hydroxypropylcellulose, l'acétate de cellulose, l'acétate butyrate de cellulose, l'acétate propionate de cellulose, le cyanoéthylcellulose, le cyanoéthylsaccharose, le polyester, le polyamide, le polyéther, le polyimide, le polycarboxate, l'acide polycarboxylique, l'acide polyacrylique, le polyacrylate, l'acide polyméthacrylique, le polyméthacrylate, le polyacrylamide, le polyuréthane, le polymère fluoré, le polymère chloré, un sel d'acide alginique, le polyfluorure de vinylidène, le poly(fluorure de vinylidène)-hexafluoropropène, et les combinaisons de ceux-ci.
